# EUROPEAN PATENT APPLICATION

(11) **EP 4 712 363 A1**
(43) Date of publication of application: **18.03.2026**
(21) Application number: 24829862.2
(22) Date of filing: 23.02.2024
(51) Int. Cl.: H04B 7/185

(54) **METHOD FOR SENDING TARGET SHARED INFORMATION AND ELECTRONIC DEVICE**

(30) Priority: 26.06.2023 CN 202310764760
(71) Applicant: Huawei Technologies Co., Ltd., Shenzhen, Guangdong 518129 (CN)
(72) Inventor: ZHANG, Shiming, Shenzhen, Guangdong 518129 (CN); TIAN, Wei, Shenzhen, Guangdong 518129 (CN); LI, Yuan, Shenzhen, Guangdong 518129 (CN); LI, Zhaoyang, Shenzhen, Guangdong 518129 (CN)
(74) Representative: Goddar, Heinz J.
(86) International application number: PCT/CN2024/078267
(87) International publication number: WO 2025/001205

(57) **Abstract**

A method for sending target shared information and an electronic device are disclosed. The method includes: separately receiving, through a satellite, first help-seeking information sent by a first terminal and second help-seeking information sent by a second terminal, where the first help-seeking information includes first help-seeking content, first sending time, and first location information, and the second help-seeking information includes second help-seeking content, second sending time, and second location information; when a time difference does not exceed first preset time and a distance difference does not exceed a preset distance, generating the target shared information, where the target shared information indicates help-seeking information of the first terminal and help-seeking information of the second terminal, the time difference is an absolute value of a difference between the first sending time and the second sending time, and the distance difference is an absolute value of a distance difference between a location indicated by the first location information and a location indicated by the second location information; and sending the target shared information to a target terminal, where the target terminal is the first terminal and/or the second terminal. According to the method, a probability of rescuing a help seeker can be increased.

## Description

This application claims priority to Chinese Patent Application No. 202310764760.9, filed with the China National Intellectual Property Administration on June 26, 2023 and entitled "METHOD FOR SENDING TARGET SHARED INFORMATION AND ELECTRONIC DEVICE", which is incorporated herein by reference in its entirety.

### TECHNICAL FIELD

This application relates to the field of terminal technologies, and in particular, to a method for sending target shared information and an electronic device.

### BACKGROUND

With rapid development of satellite communication technologies, a terminal device may establish communication with a satellite when a network is unavailable. For example, a help seeker may send help-seeking information to a satellite by using a terminal device (for example, a mobile phone) when a network is unavailable. After receiving the help-seeking information, the satellite forwards the help-seeking information to a ground station. Then, the ground station forwards the help-seeking information to a rescuer (namely, a helper). After receiving the help-seeking information, the rescuer may make a corresponding reply based on the help-seeking information, and send reply information to the ground station by using the terminal device. The help seeker may pull the reply information of the rescuer from the ground station by using the terminal device through the satellite.

However, after sending the help-seeking information to the rescuer, the help seeker may not pull the reply information of the rescuer in time. As a result, the best time for rescue may be delayed. Therefore, how to increase a probability of rescuing the help seeker is an urgent problem to be resolved currently.

### SUMMARY

This application provides a method for sending target shared information and an electronic device, to increase a probability of rescuing a help seeker.

According to a first aspect, a method for sending target shared information is provided. The method may be performed by an electronic device, or may be performed by a module (for example, a processor, a chip, or a chip system) used in the electronic device, or may be implemented by a logical node, a logical module, or software that can implement all or a part of functions of the electronic device. The method includes:
separately receiving, through a satellite, first help-seeking information sent by a first terminal and second help-seeking information sent by a second terminal, where the first help-seeking information includes first help-seeking content, first sending time, and first location information, the second help-seeking information includes second help-seeking content, second sending time, and second location information, the first sending time is sending time of the first help-seeking information, the first location information indicates a location at which the first terminal sends the first help-seeking information, the second sending time is sending time of the second help-seeking information, and the second location information indicates a location at which the second terminal sends the second help-seeking information;
when a time difference does not exceed first preset time and a distance difference does not exceed a preset distance, generating the target shared information based on the first help-seeking information and the second help-seeking information, where the target shared information indicates help-seeking information of the first terminal and help-seeking information of the second terminal, the time difference is an absolute value of a difference between the first sending time and the second sending time, and the distance difference is an absolute value of a distance difference between the location indicated by the first location information and the location indicated by the second location information; and
sending the target shared information to a target terminal, where the target terminal is the first terminal and/or the second terminal.

In the foregoing method, the electronic device determines the time difference and the distance difference based on the first help-seeking information and the second help-seeking information. When the time difference does not exceed the first preset time and the distance difference does not exceed the preset distance, it indicates that a first help seeker corresponding to the first terminal and a second help seeker corresponding to the second terminal may encounter a same predicament. The electronic device may generate the target shared information based on the first help-seeking information and the second help-seeking information, and send the target shared information to the target terminal. The method can enable a help seeker corresponding to the target terminal to learn of location information of another nearby help seeker, and can enable the help seeker corresponding to the target terminal to select a better gathering location based on a location of the help seeker and a location of the another nearby help seeker, to help gather the another nearby help seeker, thereby increasing a probability of rescuing help seekers.

In an optional implementation, sending the target shared information to the target terminal includes:
determining, within second preset time, a total quantity of terminals that send help-seeking information; and when the total quantity is greater than or equal to a preset quantity threshold, sending the target shared information to the target terminal in a receipt manner.

When the total quantity is greater than or equal to the preset quantity threshold, it indicates that a group disaster may exist within the second preset time, and there are a large quantity of help seekers. The electronic device may send the target shared information to the target terminal in the receipt manner, to reduce a quantity of times of communication between the target terminal and the satellite, thereby saving satellite resources.

In an optional implementation, the method further includes: when the total quantity is less than the preset quantity threshold, sending the target shared information to the target terminal in the receipt manner or a query feedback manner, where the query feedback manner is a manner of sending the target shared information to the target terminal in response to query information of the target terminal.

When the total quantity is less than the preset quantity threshold, it indicates that there are a small quantity of help seekers within the second preset time. In this case, the satellite resources are sufficient. The electronic device may send the target shared information to the target terminal in the receipt manner, to reduce the quantity of times of communication between the target terminal and the satellite, thereby saving the satellite resources. Alternatively, the electronic device may send the target shared information to the target terminal in the query feedback manner, to improve fault tolerance when a success rate of satellite alignment is low and the satellite does not return a receipt.

In an optional implementation, sending the target shared information to the target terminal includes:
receiving first query information and/or second query information through the satellite, where the first query information is used to query first rescue information, the second query information is used to query second rescue information, the first rescue information is rescue information corresponding to the first help-seeking information, and the second rescue information is rescue information corresponding to the second help-seeking information; and
sending the target shared information to the first terminal when the first rescue information is not found based on the first query information, and/or sending the target shared information to the second terminal when the second rescue information is not found based on the second query information.

When the electronic device does not find the first rescue information (or the second rescue information) based on the first query information (or the second query information), it indicates that the electronic device does not receive a reply from a first rescuer (or a second rescuer) for the first help-seeking information (or the second help-seeking information). In this case, the electronic device may send the target shared information to the first terminal (or the second terminal), so that the first help seeker (or the second help seeker) corresponding to the first terminal (or the second terminal) selects a better gathering location based on a location of the first help seeker (or the second help seeker) and a location of another nearby help seeker, to help gather the nearby help seeker, thereby increasing a probability of mutual rescue between help seekers.

In an optional implementation, the method further includes: sending the first rescue information to the first terminal when the first rescue information is found based on the first query information, and/or sending the second rescue information to the second terminal when the second rescue information is found based on the second query information.

When finding the first rescue information based on the first query information, the electronic device may send the first rescue information to the first terminal, so that the first help seeker corresponding to the first terminal can obtain the first rescue information in time; and/or when finding the second rescue information based on the second query information, the electronic device may send the second rescue information to the second terminal, so that the second help seeker corresponding to the second terminal can obtain the second rescue information in time.

In an optional implementation, the target shared information includes a user identifier of the first terminal and a user identifier of the second terminal, the user identifier of the first terminal is a user identifier allocated based on a device identifier of the first terminal in the first help-seeking information, and the user identifier of the second terminal is a user identifier allocated based on a device identifier of the second terminal in the second help-seeking information.

In this embodiment, the target shared information received by the first terminal or the second terminal includes the user identifier of the first terminal and the user identifier of the second terminal. The user identifier helps the electronic device accurately forward the help-seeking information of the first terminal or the second terminal to the first terminal or the second terminal, to avoid incorrect forwarding of the help-seeking information.

In an optional implementation, after sending the target shared information to the target terminal, the method further includes:
receiving third help-seeking information from the first terminal, where the third help-seeking information includes third help-seeking content and the user identifier of the second terminal; and
sending the third help-seeking information to the second terminal based on the user identifier of the second terminal.

The electronic device may accurately forward the third help-seeking information to the second terminal based on the user identifier of the second terminal in the third help-seeking information, instead of forwarding the third help-seeking information to another terminal, so that bidirectional communication between the first terminal and the second terminal is established, information exchange between help seekers is implemented, and the probability of mutual rescue between the help seekers is increased.

According to a second aspect, an apparatus for sending target shared information is provided. The apparatus includes a transceiver module and a processing module. The transceiver module is configured to: separately receive, through a satellite, first help-seeking information sent by a first terminal and second help-seeking information sent by a second terminal, where the first help-seeking information includes first help-seeking content, first sending time, and first location information, the second help-seeking information includes second help-seeking content, second sending time, and second location information, the first sending time is sending time of the first help-seeking information, the first location information indicates a location at which the first terminal sends the first help-seeking information, the second sending time is sending time of the second help-seeking information, and the second location information indicates a location at which the second terminal sends the second help-seeking information.

The processing module is configured to: when a time difference does not exceed first preset time and a distance difference does not exceed a preset distance, generate the target shared information based on the first help-seeking information and the second help-seeking information, where the target shared information indicates help-seeking information of the first terminal and help-seeking information of the second terminal, the time difference is an absolute value of a difference between the first sending time and the second sending time, and the distance difference is an absolute value of a distance difference between the location indicated by the first location information and the location indicated by the second location information.

The transceiver module is further configured to send the target shared information to a target terminal, where the target terminal is the first terminal and/or the second terminal.

According to a third aspect, an embodiment of this application provides an electronic device. The electronic device includes a processor and a memory. The memory is configured to store a computer program. The processor is configured to: invoke the computer program from the memory and run the computer program, to enable the electronic device to perform the method in any one of the first aspect and the possible implementations of the first aspect.

According to a fourth aspect, an embodiment of this application provides a computer-readable storage medium. The computer-readable storage medium stores computer program instructions, and when the computer program instructions are executed by a processing circuit, the method in any one of the first aspect or the possible implementations of the first aspect is implemented.

According to a fifth aspect, an embodiment of this application provides a computer program product including instructions. When the instructions are run on a computer, the computer is enabled to perform the method in any one of the first aspect or the possible implementations of the first aspect.

According to a sixth aspect, a chip system is provided. The chip system includes a processing circuit and a storage medium. The storage medium stores computer program instructions, and when the computer program instructions are executed by the processing circuit, the method in any one of the first aspect and the possible implementations of the first aspect is implemented.

Optionally, in the foregoing chip system, the processing circuit may be replaced with a processor, and the storage medium may be replaced with a memory. Optionally, the chip system may further include a communication interface, and the communication interface is configured to implement communication between the chip system and an external device.

### BRIEF DESCRIPTION OF DRAWINGS

FIG. 1 is a diagram of a structure of an electronic device 100 according to an embodiment of this application;
FIG. 2 is a diagram of a software structure of an electronic device 100 according to an embodiment of this application;
FIG. 3 is a schematic flowchart of a method for sending target shared information according to an embodiment of this application;
FIG. 4(a) to FIG. 4(d) are a diagram of an interface for enabling a personal information sharing function according to an embodiment of this application;
FIG. 5 is a diagram of another interface for enabling a personal information sharing function according to an embodiment of this application;
FIG. 6(a) to FIG. 6(d) are a diagram of an interface applicable to this application according to an embodiment of this application;
FIG. 7(a) to FIG. 7(d) are a diagram of another interface applicable to this application according to an embodiment of this application;
FIG. 8(a) to FIG. 8(d) are a diagram of another interface applicable to this application according to an embodiment of this application;
FIG. 9(a) to FIG. 9(d) are a diagram of another interface applicable to this application according to an embodiment of this application;
FIG. 10(a) to FIG. 10(d) are a diagram of another interface applicable to this application according to an embodiment of this application;
FIG. 11(a) and FIG. 11(b) are a diagram of another interface applicable to this application according to an embodiment of this application;
FIG. 12(a) to FIG. 12(d) are a diagram of another interface applicable to this application according to an embodiment of this application;
FIG. 13(a) to FIG. 13(d) are a diagram of another interface applicable to this application according to an embodiment of this application;
FIG. 14 is a schematic interaction flowchart of a method for sending target shared information according to an embodiment of this application;
FIG. 15 is a schematic interaction flowchart of another method for sending target shared information according to an embodiment of this application;
FIG. 16 is a schematic interaction flowchart of still another method for sending target shared information according to an embodiment of this application;
FIG. 17 is a schematic interaction flowchart of terminal-satellite-ground station according to an embodiment of this application;
FIG. 18 is a diagram of a structure of an apparatus for sending target shared information according to an embodiment of this application; and
FIG. 19 is a diagram of a structure of an electronic device according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first terminal device and a second terminal device are merely intended to distinguish between different terminal devices, and do not limit a sequence thereof. Persons skilled in the art may understand that the terms such as "first" and "second" do not limit a quantity or an execution sequence, and the terms such as "first" and "second" do not indicate a definite difference.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

The electronic device in embodiments of this application may include but is not limited to at least one of a foldable electronic device, a tablet computer, a desktop computer, a laptop computer, a handheld computer, a notebook computer, an ultra-mobile personal computer (ultra-mobile personal computer, UMPC), or an artificial intelligence (artificial intelligence, AI) device. A specific type of the electronic device 100 is not specially limited in embodiments of this application.

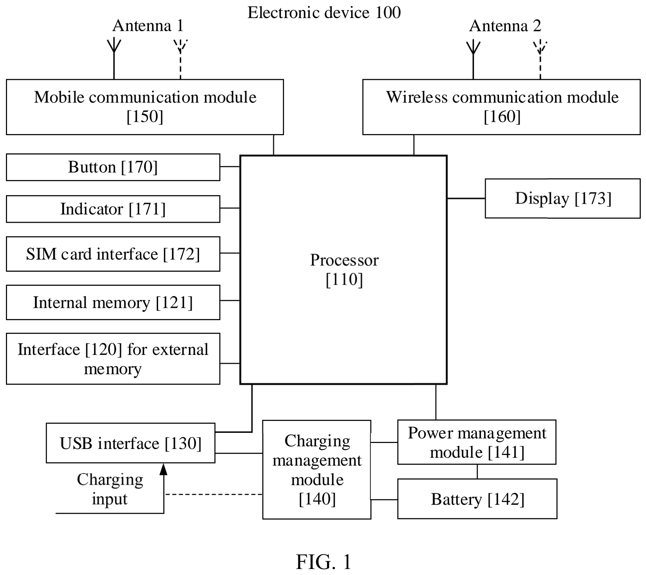

FIG. 1 is a diagram of a structure of the electronic device 100 to which the foregoing method (namely, a method for sending target shared information) is applicable.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, a button 170, an indicator 171, a subscriber identification module (subscriber identification module, SIM) card interface 172, a display 173, and the like.

It may be understood that the structure shown in embodiments of this application does not constitute a specific limitation on the electronic device 100. In some other embodiments of this application, the electronic device 100 may include more or fewer components than those shown in FIG. 1, have some components combined, have some components split, or have different component arrangements. The components in FIG. 1 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control of instruction reading and instruction execution.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as a wireless communication module and a display (screen) through at least one of the foregoing interfaces.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The USB interface 130 is an interface complying with a USB standard specification, may be configured to connect the electronic device 100 and a peripheral device, and may be specifically a mini USB interface, a micro USB interface, a USB type-C interface, or the like. The USB interface 130 may be configured to connect to a charger, so that the charger charges the electronic device 100, may be configured to connect to another terminal device, to implement data transmission between the electronic device 100 and the another terminal device, or may be configured to connect to a headset, to output, through the headset, an audio stored in the terminal device. The interface may be further configured to connect to another terminal device like a VR device. In some embodiments, standard specifications of the universal serial bus may be USB1.x, USB2.0, USB3.x, and USB4.

The charging management module 140 is configured to receive a charging input of the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the terminal device through the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, the display 173, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 may be disposed in a same component as at least a part of modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker or the like), or displays an image or a video through the display 173. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another terminal device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 173, the application processor, and the like. The GPU is a microprocessor for image processing, and is connected to the display 173 and the application processor. The GPU is configured to: perform mathematical and geometric computation, and render an image. The processor 110 may include one or more GPUs that execute program instructions to generate or change display information.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card, or files such as music and videos are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), or the like. The data storage area may store data (for example, audio data) created when the electronic device 100 is used, or the like. In addition, the internal memory 121 may include a high-speed random access memory, or may include a nonvolatile memory, for example, at least one magnetic disk storage component, a flash memory, or a universal flash storage (universal flash storage, UFS). The processor 110 runs the instructions stored in the internal memory 121, and/or the instructions stored in the memory disposed in the processor, to perform various function methods of the electronic device 100 and data processing.

The button 170 may include a power button, a volume button, and the like. The button 170 may be a mechanical button, or may be a touch button. The electronic device 100 may receive a button input, and generate a button signal input related to a user setting and function control of the electronic device 100.

The indicator 171 may be an indicator light, and may be configured to indicate a charging status, a power change, a missed call, a notification, or the like.

The SIM card interface 172 is configured to connect to a SIM card. The SIM card may be inserted into the SIM card interface 172 or removed from the SIM card interface 172, to implement contact with or separation from the electronic device 100. The electronic device 100 may support one or more SIM card interfaces 172. The SIM card interface 172 may support a nano-SIM card, a micro-SIM card, a SIM card, or the like. A plurality of cards may be simultaneously inserted into a same SIM card interface 172. The plurality of cards may be of a same type or different types. The SIM card interface 172 is also compatible with different types of SIM cards. The SIM card interface 172 is also compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

The display 173 is configured to display data such as a shot image, a star image, and a video. For example, the display 173 may be configured to display an image and a video that are shot by the camera 193. The display 173 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 173.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

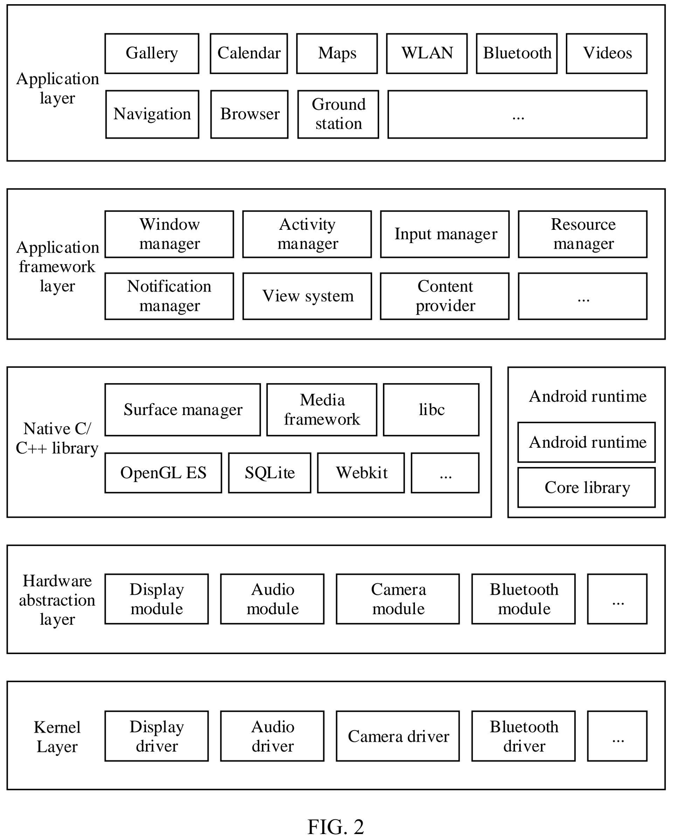

FIG. 2 is a block diagram of the software structure of the electronic device 100 in this embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 2, the application packages may include applications such as Ground station, Gallery, Calendar, Phone, Maps, Navigation, WLAN, and Bluetooth. For example, the ground station application may provide functions such as satellite or aircraft running parameter adjustment, flight monitoring, map navigation, task playback, image transmission, and flight data recording.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, and surface management, and serve as a transit station of an input system.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, may be configured to convey a notification message, and may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is displayed in the status bar, an alert tone is made, the electronic device vibrates, or an indicator blinks.

The activity manager may provide an activity manager service (Activity Manager Service, AMS). The AMS may be used to: start, switch, and schedule system components (for example, activities, services, content providers, and broadcast receivers), and manage and schedule application processes.

The input manager may provide an input manager service (Input Manager Service, IMS). The IMS may be used to manage a system input, for example, a touchscreen input, a button input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead-of-time (ahead-of-time, AOT) compilation technology and a just-in-time (just-in-time, JIT) compilation technology.

The core library is mainly used to provide functions of basic Java libraries, such as a basic data structure library, a mathematics library, an I/O library, a tool library, a database, and a network library. The core library provides the API for a user to develop an Android application.

The native C/C++ library may include a plurality of functional modules, such as a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media framework supports playback and recording of audios and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and operations of 2D and 3D graphics in the application. SQLite provides a lightweight relational database for the application of the electronic device 100.

The hardware abstraction layer runs in user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 1 and FIG. 2 is used as an example to describe in detail, with reference to the accompanying drawings and an application scenario, the method for sending the target shared information provided in embodiments of this application.

In some examples, a terminal device may establish communication with a satellite when a network is unavailable.

For example, a help seeker may send help-seeking information to a satellite and pull reply information of a rescuer from the satellite by using a terminal device (for example, a mobile phone) when a network is unavailable. However, after sending the help-seeking information, the help seeker may not pull the reply information of the rescuer in time. As a result, the best time for rescue may be delayed. Therefore, how to increase a probability of rescuing the help seeker is an urgent problem to be resolved currently. This application provides a method for sending target shared information. According to the method, a probability of rescuing a help seeker can be increased.

Before the method for sending the target shared information provided in this application is described, an execution body in embodiments of this application is first briefly described. In embodiments of this application, an electronic device is used as an example to illustrate the method provided in this application. However, an execution body is not limited in this application.

For example, the execution body in embodiments of this application may be an electronic device, or may be a chip, a chip system, or a processor used in the electronic device, or may be a logical node, a logical module, or software that can implement all or a part of functions of the electronic device.

The electronic device may include a terminal device or a server. Optionally, the terminal device may be a chip, a chip system, or a processor used in a terminal, or may be a logical node, a logical module, or software that can implement all or a part of functions of the terminal.

Optionally, the server may alternatively be a chip, a chip system, or a processor used in the server, or may be a logical node, a logical module, or software that can implement all or a part of functions of the server.

For example, the electronic device may be the electronic device 100 having the structure in FIG. 1, or may be another electronic device having the structure in FIG. 1, for example, a ground station.

The following embodiment is described by using an example in which a method 300 for sending target shared information is performed by a ground station.

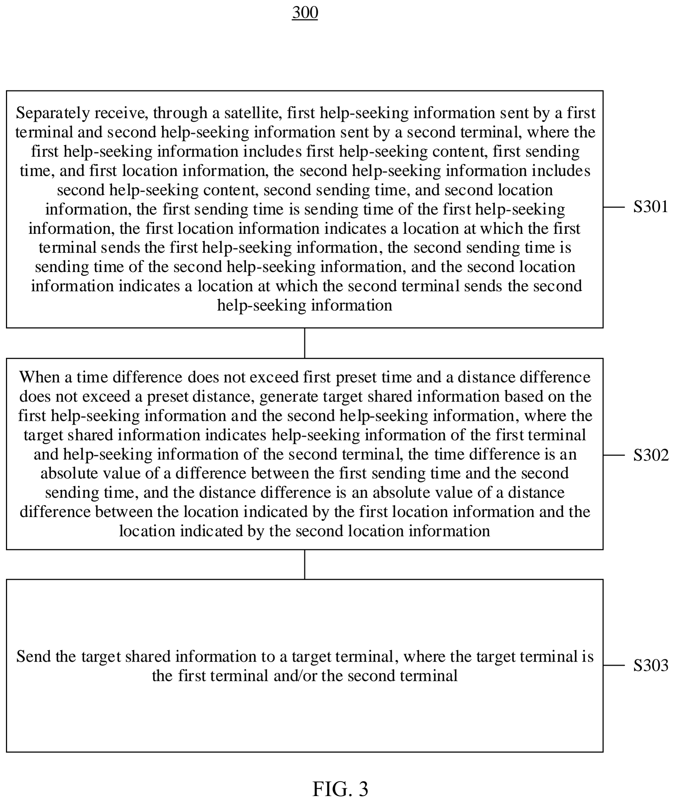

FIG. 3 is a schematic flowchart of the method 300 for sending target shared information according to an embodiment of this application. The method 300 includes S301 to S303. The following describes these steps in detail.

S301: The ground station separately receives, through a satellite, first help-seeking information sent by a first terminal and second help-seeking information sent by a second terminal, where the first help-seeking information includes first help-seeking content, first sending time, and first location information, the second help-seeking information includes second help-seeking content, second sending time, and second location information, the first sending time is sending time of the first help-seeking content, the first location information indicates a location at which the first terminal sends the first help-seeking content, the second sending time is sending time of the second help-seeking content, and the second location information indicates a location at which the second terminal sends the second help-seeking content.

The ground station is an electronic device that can receive and send information and process information. The ground station may be a terminal device or a server. This is not limited in this application.

The ground station may receive and send information from the satellite and a user terminal, and forward the received information to another ground station or user terminal. Alternatively, the ground station may directly send the information from the ground to the satellite.

For example, the ground station sends reply information of a rescuer to the satellite, so that the user terminal can pull the reply information through the satellite.

The user terminal is a terminal device used on a user side, for example, a terminal device used on a help seeker side or a terminal device used on a rescuer side.

The user terminal includes but is not limited to a mobile phone, a tablet computer, a desktop computer, a laptop computer, a handheld computer, a notebook computer, a netbook, a cellular phone, a personal digital assistant (personal digital assistant, PDA), an augmented reality (augmented reality, AR) device, a wearable device, a vehicle-mounted device, and another device.

The user terminal may exchange information with the satellite through the ground station, or may send information to the ground station or directly communicate with the satellite.

The satellite may be a satellite in a BeiDou navigation satellite system. For example, the satellite may be an inclined geosynchronous orbit satellite or a geostationary orbit satellite. This is not limited in this application.

The first terminal or the second terminal may be a user terminal. The first terminal may be a terminal device used by a first help seeker, and the second terminal may be a terminal device used by a second help seeker.

For example, the first terminal may be a mobile phone, a tablet computer, or the like, and the second terminal may also be a mobile phone, a tablet computer, a smartwatch, or the like.

The first help seeker or the second help seeker may be a person in a predicament and in need of rescue. For example, the first help seeker or the second help seeker may be a lost person, a mountain climber in distress, a person in distress in bad weather, a person in distress at sea, or the like. This is not limited in this application.

The first help-seeking content or the second help-seeking content may be specific help-seeking content sent by the help seeker to the rescuer.

For example, the first help-seeking content or the second help-seeking content may be that distress is encountered during mountain climbing and rescue is urgently needed. For another example, the first help-seeking content or the second help-seeking content may be that a landslide occurs on a rainy day and rescue is urgently needed. The first help-seeking content or the second help-seeking content is not limited in this application.

The first sending time may be a moment at which the first terminal sends the first help-seeking information through the satellite. For example, the first sending time is 16:32:33 on MM DD, YYYY.

Similarly, the second sending time may be a moment at which the second terminal sends the second help-seeking information through the satellite. For example, the second sending time is 09:12:16 on MM DD, YYYY.

The first location information may be a location at which the first terminal sends the first help-seeking information, and the second location information may be a location at which the second terminal sends the second help-seeking information.

For example, the first location information (or the second location information) may be latitude and longitude information of a location of the first terminal (or the second terminal). For example, the first location information (or the second location information) is 23°45'34" north latitude (23°45'34"N) and 111°47'23" east longitude (111°47'23"E).

In an example, the first terminal and the second terminal respectively send the first help-seeking information and the second help-seeking information to the satellite. After receiving the first help-seeking information and the second help-seeking information, the satellite forwards the first help-seeking information and the second help-seeking information to the ground station. After receiving the first help-seeking information and the second help-seeking information, the ground station parses the first help-seeking information and the second help-seeking information to obtain the first help-seeking content, the first sending time, the first location information, the second help-seeking content, the second sending time, and the second location information.

For example, a help seeker 1 sends help-seeking information 1 to the ground station by using a mobile phone 1. After receiving the help-seeking information 1, the ground station parses the help-seeking information 1 to obtain help-seeking content 1, sending time 1, and location information 1. The help-seeking content 1 is that a blizzard is encountered during mountain climbing and rescue is urgently needed; the sending time 1 is 13:15:23 on MM DD, YYYY; and the location information 1 is 23°23'43" north latitude and 115°26'34" east longitude. Similarly, a help seeker 2 sends help-seeking information 2 to the ground station by using a mobile phone 2. After receiving the help-seeking information 2, the ground station parses the help-seeking information 2 to obtain help-seeking content 2, sending time 2, and location information 2. The help-seeking content 1 is that lost in a remote mountain and rescue is urgently needed; the sending time 1 is 17:23:15 on MM DD, YYYY; and the location information 1 is 24°27'13" north latitude and 120°32'41" east longitude.

In an optional implementation, after receiving the first help-seeking information or the second help-seeking information, the ground station performs protocol conversion on the first help-seeking information or the second help-seeking information to obtain converted first help-seeking information or converted second help-seeking information. Then, the ground station sends the converted first help-seeking information to a first user terminal, namely, a first rescuer, and sends the converted second help-seeking information to a second user terminal, namely, a second rescuer.

For example, the first rescuer replies to the first help-seeking information. After receiving the first help-seeking information by using first user equipment, the first rescuer may reply to the first help-seeking information through a preset reply entry. The preset reply entry includes but is not limited to an SMS message reply entry, a reply entry provided by a MeeTime application, and a reply entry provided by a rescue platform. For example, the first rescuer replies to the first help-seeking information through a reply entry provided by an SMS message platform, and reply information is sent to the ground station by using the first user equipment. The first help seeker may pull the reply information of the first rescuer from the ground station by using the first terminal through the satellite.

S302: When a time difference does not exceed first preset time and a distance difference does not exceed a preset distance, the ground station generates the target shared information based on the first help-seeking information and the second help-seeking information, where the target shared information indicates help-seeking information of the first terminal and help-seeking information of the second terminal, the time difference is an absolute value of a difference between the first sending time and the second sending time, and the distance difference is an absolute value of a distance difference between the location indicated by the first location information and the location indicated by the second location information.

The first preset time may be 30 minutes or 1 hour, and is not limited in this application. The preset distance may be 3 kilometers or 5 kilometers, or may be a longitude value and/or a latitude value, and is not limited in this application.

In an optional implementation, after parsing the first help-seeking information and the second help-seeking information, the ground station determines the time difference based on the first sending time and the second sending time. When the time difference does not exceed the first preset time, it indicates that time of help seeking sent by the first help seeker is near to time of help seeking sent by the second help seeker. The ground station then determines the distance difference based on the first location information and the second location information. When the distance difference does not exceed the preset distance, it indicates that the first help seeker and the second help seeker are very close to each other and may be located in a same rescue area.

For example, the first preset time is 30 minutes, and the preset distance is 3'30" latitude and 2'30" longitude. A help seeker A sends help-seeking information A to the ground station by using a mobile phone A. The help-seeking information A includes help-seeking content A, sending time A, and location information A. The help-seeking content A is that a rainstorm is encountered during rock climbing and rescue is urgently needed; the sending time A is 09:11:23 on MM DD, YYYY; and the location information A is 23°21'46" north latitude and 110°32"21" east longitude. A help seeker B sends help-seeking information B to the ground station by using a mobile phone B. The help-seeking information B includes help-seeking content B, sending time B, and location information B. The help-seeking content B is that distress is encountered during rock climbing and rescue is urgently needed; the sending time B is 09:16:45 on MM DD, YYYY; and the location information B is 23°22'23" north latitude and 110°31'28" east longitude. The ground station determines, based on the sending time A and the sending time B, that a time difference is 5 minutes and 22 seconds, and determines, based on the location information A and the location information B, that a distance difference is 1'23" north latitude (less than 3'30" latitude) and 1'7" east longitude (less than 2'30" longitude). The ground station determines that the time difference does not exceed the first preset time and the distance difference does not exceed the preset distance. In this case, the ground station determines that the first help seeker and the second help seeker may be located in a same help-seeking area. The ground station generates the target shared information based on the first help-seeking information and the second help-seeking information. The target shared information may include the first help-seeking information and the second help-seeking information. In other words, the target shared information includes the first help-seeking content, the first sending time, the first location information, the second help-seeking content, the second sending time, and the second location information.

Optionally, the target shared information may alternatively include the first help-seeking content, the first location information, the second help-seeking content, and the second location information.

Optionally, the target shared information may alternatively include the first location information, the second location information, and a quantity of help seekers. Content included in the target shared information is not limited in this application, and may be designed based on a specific application scenario in actual application.

Optionally, the target shared information may alternatively include first target shared information and second target shared information. The first target shared information may include the first location information, and the second target shared information may include but is not limited to the second location information. In other words, the ground station may separately generate help-seeking information of the first terminal and help-seeking information of the second terminal for the first terminal and the second terminal based on the first help-seeking information and the second help-seeking information. The ground station may separately send the help-seeking information of the first terminal and the help-seeking information of the second terminal to the first terminal and the second terminal in a receipt manner or a query feedback manner mentioned in the specification.

For example, the ground station may generate the first target shared information based on the first help-seeking information, where the first target shared information includes help-seeking information of the first help seeker; and the ground station may further generate the second target shared information based on the second help-seeking information, where the second target shared information includes help-seeking information of the first help seeker. The ground station may send the first target shared information to the second terminal in a receipt manner or a query feedback manner, and send the second target shared information to the first terminal in a receipt manner or a query feedback manner, to implement location information sharing between the first terminal and the second terminal.

The target shared information includes the help-seeking information (for example, the first location information) of the first help seeker and the help-seeking information (for example, the second location information) of the second help seeker. This helps the first help seeker or the second help seeker determine, based on the received target shared information, that there is another nearby help seeker similar to the first help seeker or the second help seeker. The first help seeker or the second help seeker and the another nearby help seeker may help each other, to increase a probability of being rescued by each other.

It should be noted that after receiving a plurality of pieces of help-seeking information, the ground station may generate the target shared information based on the plurality of pieces of help-seeking information, and cache the target shared information in a message box (for example, a BeiDou satellite message box). When each terminal pulls help-seeking information from the ground station through the satellite, if the ground station does not detect rescue information, the ground station sends the target shared information to each terminal from the message box. When sending the target shared information to a terminal, the ground station usually first sends the target shared information to a device that has previously sent help-seeking information to the ground station.

Optionally, an information structure of the target shared information may include but is not limited to an information type (for example, service number information, system information, replier information, or rescuer information), whether multi-login on a local end and a receive end is supported (that is, whether the help seeker is supported in logging in to a same account on different devices), a unique identifier of the target shared information, a mobile phone number corresponding to each terminal, sending time, and a device identifier corresponding to each terminal.

Optionally, an information structure of the rescue information (namely, the reply information) may include but is not limited to an information type (for example, service number information, system information, replier information, or rescuer information), whether multi-login on a local end and a receive end is supported (that is, whether the help seeker is supported in logging in to a same account on different devices), a unique identifier of the rescue information, a mobile phone number corresponding to each terminal, sending time, a device identifier corresponding to each terminal, a mobile phone number of a replier, a reply number, and a reply version.

It should be noted that, because satellite resources are limited, the replier may reply with a preset reply of a satellite service, and different replies have different numbers. When sending reply information, a terminal usually sends a number and a version number of the reply.

In an optional implementation, the target shared information includes a user identifier of the first terminal and a user identifier of the second terminal, the user identifier of the first terminal is a user identifier allocated by the ground station based on a device identifier of the first terminal in the first help-seeking information, and the user identifier of the second terminal is a user identifier allocated by the ground station based on a device identifier of the second terminal in the second help-seeking information.

The user identifier (identifier, ID) of the first terminal or the user identifier of the second terminal may be a string of digits with a unique identifier. For example, the user ID of the first terminal is 02100214978.

When the ground station receives a plurality of pieces of help-seeking information sent by a plurality of help seekers by using a plurality of terminals, the ground station may allocate a virtual number to each terminal based on a device identifier carried in each piece of help-seeking information in the plurality of pieces of help-seeking information. The plurality of virtual numbers corresponding to the plurality of terminals may form a virtual group. The ground station may generate a group identifier for the virtual group.

For example, the user identifier of the first terminal may indicate an identifier of the first terminal, and the user identifier of the second terminal may indicate an identifier of the second terminal. When the first terminal and the second terminal send information to each other, the ground station may accurately forward, based on the user identifier of the first terminal and the user identifier of the second terminal, the information sent between the first terminal and the second terminal.

For example, the ground station receives the first help-seeking information sent by the first terminal and the second help-seeking information sent by the second terminal. The ground station allocates a user identifier of the first terminal, for example, 042525201, to the first terminal based on the device identifier of the first terminal in the first help-seeking information. Similarly, the ground station allocates a user identifier of the second terminal, for example, 478728002, to the second terminal based on the device identifier of the first terminal in the second help-seeking information. When sending the target shared information to the first help seeker and the second help seeker, the ground station may share the user identifier of the first terminal and the user identifier of the second terminal with the first terminal and the second terminal, to help the ground station accurately forward, based on the user identifier of the first terminal and the user identifier of the second terminal, the information sent between the first terminal and the second terminal.

For example, when a network is unavailable, and the first terminal sends information A to the second terminal through the satellite, the information A may carry a user identifier 001 of the second terminal. When the satellite forwards the information A to the ground station, the ground station may determine, based on the user identifier 001 of the second terminal carried in the information A, that the information A needs to be sent to the second help seeker. The ground station may send the information A to the second help seeker through the satellite. In this way, mutual communication between the first help seeker and the second help seeker is implemented.

For another example, when the second terminal pulls second rescuer information through the satellite, if the second rescuer is not successfully pulled, the ground station may return, to the second terminal through the satellite, the information A sent by the first terminal to the second terminal.

It should be noted that when returning the information A to the second terminal, the ground station carries the user identifier of the second terminal in the information A, so that the ground station learns of a device to which the information A is sent, thereby improving forwarding accuracy.

It can be learned that the target shared information received by the first terminal or the second terminal includes the user identifier of the first terminal and the user identifier of the second terminal. The user identifier helps the electronic device accurately forward the help-seeking information of the first terminal or the second terminal to the first terminal or the second terminal, to avoid incorrect forwarding of the help-seeking information.

In an optional implementation, after receiving the plurality of pieces of help-seeking information, the ground station not only allocates one user identifier to each of the plurality of terminals based on the plurality of device identifiers carried in the plurality of pieces of help-seeking information, but also associates the plurality of user identifiers with personal information of a plurality of help seekers corresponding to the plurality of terminals.

The personal information may include but is not limited to a mobile phone number and a name.

For example, the user identifier of the first terminal may be associated with a mobile phone number of the first help seeker, or may be associated with information such as a mobile phone number and a name of the first help seeker. In this way, help seekers can learn more detailed information about each other, thereby further improving accuracy of sending help-seeking information to each other, and further increasing a probability of being rescued by each other.

Optionally, as shown in Table 1, Table 1 shows mobile phone numbers and names of help seekers corresponding to user identifiers. The ground station may send information in Table 1 to each terminal (for example, the first terminal or the second terminal) in a receipt manner. After receiving the information in Table 1, each terminal may flexibly select a terminal for further communication based on the user identifiers in Table 1.

For example, if a first terminal with a user identifier 01001 sends information K to a second terminal, the first terminal may carry a user identifier 01002 of the second terminal in the information K, so that the ground station forwards the information K to the second terminal based on the user identifier 01002 in the information K.

For another example, as shown in Table 1, Table 1 shows a mapping relationship between each user identifier and personal information of a corresponding help seeker. The personal information includes but is not limited to a mobile phone number and a name of the help seeker. For example, the user identifier of the first terminal is the user identifier 01001 in a group 001; a mobile phone number of a help seeker corresponding to the user identifier 01001 is 137********, and a name is Wang XX; the user identifier of the second terminal is a user identifier 01004 in the group 001; and a mobile phone number of a help seeker corresponding to the user identifier 01004 is 187********, and a name is Zhu XX. The first terminal may learn of a help seeker based on a mobile phone number and a name in the information in Table 1. For example, the first help seeker and the second help seeker know each other. The first help seeker XX wants to send a message X to the second help seeker XX. The first terminal may determine the user identifier of the second terminal based on the user identifier in Table 1. The first terminal may indicate, by carrying the user identifier 01004 of the second terminal in information X, the ground station to forward the information X to the second terminal. For example, the first terminal sends the information X to the satellite. Then, the satellite forwards the information X to the ground station. After receiving the information X, the ground station determines, based on the user identifier 01004 of the second terminal carried in the information X, that the information X needs to be forwarded to the second terminal in the group 001.

For another example, a user identifier of a first terminal corresponding to a first help seeker is 01001, a user identifier of a second terminal corresponding to a second help seeker is 01004, a user identifier of a third terminal corresponding to a third help seeker is 01002, and a user identifier of a fourth terminal corresponding to a fourth help seeker is 01003. The four help seekers belong to a same expedition team and know each other. The first help seeker is responsible for carrying water and food of members of the expedition team, and the second help seeker is responsible for carrying a first aid kit (for example, common medicines such as hemostasis and disinfection) for the expedition team to survive in the field. When the expedition team encounters a blizzard during the expedition and the members of the entire team are separated, the four help seekers may send four pieces of help-seeking information to the ground station through the satellite. The ground station generates target shared information based on the four pieces of help-seeking information, and separately sends the target shared information to the four help seekers in a receipt manner. The target shared information includes the mapping relationship shown in Table 1. The information shown in Table 1 is information that is related to four user identifiers and that is generated by the ground station based on the four pieces of help-seeking information (for example, four device identifiers in the four pieces of help-seeking information) (for example, the ground station generates a corresponding user identifier based on each device identifier, and associates the user identifier with personal information of a help seeker corresponding to each device). After receiving the target shared information, the four help seekers each may determine, based on the mapping relationship in Table 1, a help seeker for further communication. For example, after the fourth help seeker is separated, there is no food to eat. In this case, the fourth help seeker may send, to the first help seeker based on the mapping relationship in Table 1, help-seeking information indicating that food needs to be shared.

For example, the fourth terminal may send, to the ground station through the satellite, help-seeking information Y indicating that food is needed, where the information Y carries the user identifier 01001 of the first terminal. The ground station may determine, based on the user identifier 01001 in the information Y, that the information Y is sent to the first terminal; and the ground station forwards the information Y to the first terminal. The first help seeker may reply information Z to the fourth terminal based on the information Y by using the first terminal. For example, the information Z is that food can be shared, and we gather at A. When the fourth terminal tries to pull reply information of a rescuer from the satellite, if the ground station does not detect the reply information of the rescuer in response to a pulling operation of the fourth terminal, the ground station may send the information Z to the fourth terminal through the satellite. The fourth help seeker may obtain water and food in a manner indicated by the information Z, to obtain help from another help seeker in the team. In this embodiment, the fourth help seeker may obtain food and water from the first help seeker in time based on the mapping relationship in Table 1, to avoid a long-term hunger state during waiting for external rescue.

**Table 1 Mapping relationship between each user identifier and personal information of a corresponding help seeker**

| Group identifier (group ID) | User identifier | Mobile phone number | Name |
|---|---|---|---|
| 001 | 01001 | 137******** | Wang XX |
| 001 | 01002 | 154******** | Mu XX |
| 001 | 01003 | 185******** | Ke XX |
| 001 | 01004 | 187******** | Zhu XX |
| 002 | 02101 | 153******** | Zhao XX |
| 002 | 02202 | 155******** | Han XX |
| ··· | ··· | ··· | ··· |

It should be noted that, when all the help seekers have a satellite message sending capability, if a quota is sufficient, a quantity of times of sending information or replying to information between the help seekers by using the terminal may not be limited.

S303: The ground station shares the target shared information with a target terminal, where the target terminal is the first terminal and/or the second terminal.

In a possible implementation, the ground station separately shares the target shared information with the first terminal and the second terminal in a receipt manner. For example, after obtaining the target shared information by using the first terminal (or the second terminal), the first help seeker (or the second help seeker) may learn of information of another nearby help seeker (for example, the second help seeker). When the first help seeker (or the second help seeker) does not pull the reply information of the first rescuer (or the second rescuer) through the satellite, the first help seeker (or the second help seeker) may contact the second help seeker (or the first help seeker) based on the target shared information, to increase a probability of being rescued by each other through mutual help between the help seekers.

In another possible implementation, the ground station stores the target shared information in the message box, for example, the BeiDou satellite message box. When the first terminal (or the second terminal) pulls the reply information of the first rescuer (or the second rescuer) through the satellite, and the message box does not include the reply information of the first rescuer (or the second rescuer), the ground station sends the target shared information in the message box to the first terminal (or the second terminal). The first help seeker (or the second help seeker) may contact the second help seeker (or the first help seeker) based on the target shared information, to increase a probability of being rescued by each other through mutual help between the help seekers.

It should be noted that the ground station may separately send the target shared information to the first terminal and the second terminal at the same time.

For example, the ground station may separately send the target shared information to the first terminal and the second terminal at the same time in response to query instructions of the first terminal and the second terminal.

For another example, the ground station may separately share the target shared information with the first terminal and the second terminal at the same time in a receipt manner. Alternatively, the ground station may send the target shared information to the first terminal or the second terminal in response to a query instruction of the first terminal (or the second terminal).

It can be learned that in the method 300, the ground station determines the time difference and the distance difference based on the first help-seeking information and the second help-seeking information. When the time difference does not exceed the first preset time and the distance difference does not exceed the preset distance, it indicates that the first help seeker corresponding to the first terminal and the second help seeker corresponding to the second terminal may encounter a same predicament. The ground station may generate the target shared information based on the first help-seeking information and the second help-seeking information, and send the target shared information to the target terminal. The method can enable a help seeker corresponding to the target terminal to learn of location information of another nearby help seeker, and can enable the help seeker corresponding to the target terminal to select a better gathering location based on a location of the help seeker and a location of the another nearby help seeker, to help gather the another nearby help seeker, thereby increasing a probability of rescuing help seekers.

In the method 300, step S302 may alternatively be implemented by using a method 400. The method 400 includes S401 and S402. The following describes these steps in detail.

S401: The ground station determines, within second preset time, a total quantity of terminals that send help-seeking information.

The second preset time may be 5 minutes or 10 minutes. This is not limited in this application. The total quantity of terminals may be a total quantity of terminals that send help-seeking information to the satellite within the second preset time.

For example, the second preset time is 5 minutes. If the satellite receives, within 5 minutes, a plurality of pieces of help-seeking information sent by 10 help seekers by using 10 terminals (for example, mobile phones) to the satellite, the ground station determines, based on the plurality of pieces of help-seeking information of the 10 terminals forwarded by the satellite, that the total quantity of terminals is 10.

For example, after receiving the plurality of pieces of help-seeking information sent by the 10 terminals and forwarded by the satellite, the ground station collects statistics on device identifiers in the plurality of pieces of help-seeking information, to determine a total quantity of different terminals from which the plurality of pieces of help-seeking information come, thereby determining the total quantity of terminals. For example, if the ground station determines, based on the plurality of pieces of help-seeking information forwarded by the satellite, that the help-seeking information is sent by 10 terminals, the total quantity of terminals is 10.

S402: When the total quantity of terminals is greater than or equal to a preset quantity threshold, the ground station sends the target shared information to the target terminal in a receipt manner.

The preset quantity threshold may be 20, 30, 50, or the like. This is not limited in this application.

When the ground station determines that the total quantity of terminals is greater than the preset quantity threshold, it indicates that a group disaster may exist currently, and there are a large quantity of help seekers. In this case, the ground station may generate the target shared information based on the plurality of pieces of help-seeking information, and send the target shared information to the target terminal in a receipt manner, to reduce a quantity of times of communication between the target terminal and the satellite, thereby saving satellite resources.

Optionally, the target shared information may include but is not limited to a total quantity of help seekers and location information of each help seeker, so that the help seekers can learn of locations of each other based on the target shared information, to formulate a proper gathering location, thereby increasing a probability of being rescued by each other. For details, refer to the following interface embodiments. Details are not described herein again.

It should be noted that a process in which the ground station returns the target shared information to each terminal (for example, the first terminal) in a receipt manner may be implemented by using a method 500. The method 500 includes S501 to S503, which are specifically as follows:
S501: The first terminal sends the first help-seeking information to the ground station by using through the satellite.

For example, the first terminal sends the first help-seeking information to the satellite by using a BeiDou satellite message service, and the second terminal sends the second help-seeking information to the satellite by using the BeiDou satellite message service. The satellite forwards the first help-seeking information and the second help-seeking information to the ground station.

S502: After receiving the first help-seeking information and the second help-seeking information, the ground station generates the target shared information based on the first help-seeking information and the second help-seeking information.

For example, after receiving the first help-seeking information and the second help-seeking information, the ground station parses the first help-seeking information and the second help-seeking information to obtain the first help-seeking content, the first sending time, the first location information, the second help-seeking content, the second sending time, and the second location information; and the ground station generates the target shared information based on the information obtained through parsing.

For a manner in which the ground station generates the target shared information based on the first help-seeking information and the second help-seeking information, refer to the related descriptions of step S302. Details are not described herein again.

S503: The ground station caches the target shared information in the message box (for example, the BeiDou satellite message box). The satellite may obtain the target shared information from the message box, and carry the target shared information in receipt information and send the receipt information to the help seeker.

The message box may be the BeiDou satellite message box, or may be another message box. This is not limited in this application.

For example, the first terminal sends the first help-seeking information to the satellite, and the satellite forwards the first help-seeking information to the ground station. After successfully forwarding the first help-seeking information to the ground station, the satellite returns, to the first terminal, receipt information indicating that the first help-seeking information is successfully sent.

Optionally, the receipt information may alternatively be generated by the ground station. The ground station sends the receipt information to the satellite, and then the satellite sends the receipt information to the first terminal.

Optionally, when returning the receipt information to the first terminal, the satellite may obtain the target shared information from the message box, and carry the target shared information in the receipt information and send the receipt information to the first terminal.

For example, the satellite carries the target shared information in the receipt information and sends the receipt information to the first terminal. After the first terminal receives the receipt information, the first help seeker may learn of a status of a nearby help seeker based on the target shared information in the receipt information. In this way, the first help seeker may seek help from another help seeker or provide help for another help seeker, to increase the probability of being rescued by each other.

In this embodiment, the ground station sends the target shared information to each terminal in a satellite receipt manner, and each terminal does not need to actively pull the target shared information from the satellite. This can reduce a quantity of times of mutual communication between each terminal and the satellite, thereby saving satellite resources.

In an optional implementation, when the total quantity of terminals is less than the preset quantity threshold, the target shared information is sent to the target terminal in the receipt manner or a query feedback manner, where the query feedback manner is a manner of sending the target shared information to the target terminal in response to query information of the target terminal.

Optionally, the query feedback manner may be implemented by using a method I. The method I includes step (1) to step (3).

Step (1): Each terminal (for example, the first terminal and/or the second terminal) sends query information to the satellite. The query information is used by a user to query rescue information. For example, the query information may be first query information and/or second query information below, and the rescue information may be reply information corresponding to help-seeking information. For example, the rescue information may be first rescue information and/or second rescue information below. Reference may be made to the following detailed descriptions, and details are not described herein again.

Step (2): The satellite pulls the rescue information from the ground station based on the query information. If the ground station does not find the rescue information based on the query information, the ground station sends the target shared information to the satellite.

It should be noted that if the ground station finds the rescue information based on the query information, the ground station determines, based on priorities of the rescue information and the target shared information, which information is to be sent to the satellite.

For example, if a priority of the rescue information is higher than that of the target shared information, the ground station sends the rescue information to the satellite.

In an optional embodiment, if the ground station finds, in the message box based on the query information, a plurality of pieces of rescue information replied to the first help seeker and information sent by another nearby help seeker to the first help seeker, the ground station sends information to the satellite based on the priority in Table 2. Then, the satellite returns the information to the first help seeker.

As shown in Table 2, if the ground station finds rescue information 1 to 3 and information of nearby help seekers 1 and 2 based on the first query information sent by the first terminal, the ground station returns information to the satellite based on the priority shown in Table 2, for example, preferentially returns the rescue information 1 to 3 to the satellite.

Optionally, usually, after a help seeker (for example, the first help seeker) receives a plurality of pieces of rescue information, there is a high probability that the help seeker is successfully rescued. To enable the successfully rescued help seeker to perceive another nearby help seeker, when sending the rescue information 1 to 3 to the satellite, the ground station sends information of another nearby help seeker (for example, a total quantity of nearby help seekers) to the satellite together, so that the satellite sends both the rescue information and the information of the another nearby help seeker to the help seeker in a receipt manner.

**Table 2 Priority list of rescue information and other information**

| Time sequence | | Rescue information (reply information) | Priority |
|---|---|---|---|
| Time sequence 1 | 9:00 | Rescue information 1 | 1 |
| | 9:02 | Rescue information 2 | 2 |
| | 9:10 | Rescue information 3 | 3 |
| Time sequence 2 | 9:01 | Information of a nearby help seeker 1 | 4 |
| | 9:06 | Information of a nearby help seeker 2 | 5 |
| | ··· | ··· | ··· |

Step (3): The satellite separately sends the target shared information (or the rescue information) to each terminal.

For example, when the information obtained by the satellite from the ground station based on the first query information is the target shared information, it indicates that there is no rescue information on a ground station side. In this case, the satellite sends the target shared information to the first terminal.

For another example, when the information obtained by the satellite from the ground station based on the first query information is the rescue information (for example, the rescue information 1 to 3 and the total quantity of other nearby help seekers), the satellite may send the rescue information to the first terminal. The first help seeker may learn, based on the rescue information, that there is another nearby help seeker. The first help seeker may assist the another nearby help seeker after being rescued, to increase a probability of rescuing the another nearby help seeker.

When the total quantity of terminals is less than the preset quantity threshold, it indicates that there are a small quantity of help seekers currently, and satellite resources are sufficient. In an optional implementation, the ground station may generate the target shared information based on the first help-seeking information and the second help-seeking information, and send the target shared information to the target terminal in a receipt manner. In this way, a quantity of times of communication between the target terminal and the satellite can be reduced, thereby saving satellite resources.

It should be noted that, because there are a small quantity of help seekers currently and satellite resources are sufficient, the target shared information generated by the ground station may include more detailed information about the help seekers. For example, the target shared information may include a total quantity of help seekers, a total quantity of pieces of help-seeking information, location information of each help seeker, and help-seeking content.

In another optional implementation, when the total quantity of terminals is less than the preset quantity threshold, the ground station may alternatively send the target shared information to the target terminal in a query feedback manner, to improve fault tolerance when a success rate of satellite alignment is low and the satellite does not return a receipt.

It should be noted that the ground station may determine, based on the total quantity of terminals within the second preset time, content of help-seeking information to be forwarded to the help seekers.

For example, when one person in a same area sends help-seeking information to the ground station through the satellite by using a mobile phone, the ground station may forward the complete help-seeking information to a rescuer.

For another example, when one person in a same area sends a plurality of pieces of help-seeking information by using a mobile phone, the ground station may forward the first piece of help-seeking information in the plurality of pieces of rescue information and a total quantity of help-seeking times (each piece of help-seeking information indicates one help-seeking time).

For another example, when a plurality of persons in a same area send a plurality of pieces of help-seeking information by using mobile phones, the ground station may combine the plurality of pieces of help-seeking information into information A. If a quantity of pieces of information combined into the information A exceeds a single combination quantity specified in a protocol, the plurality of pieces of help-seeking information are first split into a plurality of groups and then combined.

Optionally, each group of combined rescue information may reflect a total quantity of help seekers and location information of each help seeker. Alternatively, optionally, each group of combined rescue information may reflect each help seeker and location information of each help seeker. This is not limited in this application.

In an optional implementation, that the ground station sends the target shared information to the target terminal includes: receiving first query information and/or second query information through the satellite, where the first query information is used to query the first rescue information, the second query information is used to query the second rescue information, the first rescue information is rescue information corresponding to the first help-seeking information, and the second rescue information is rescue information corresponding to the second help-seeking information; and sending the target shared information to the first terminal when the first rescue information is not found based on the first query information, and/or sending the target shared information to the second terminal when the second rescue information is not found based on the second query information.

It can be learned from the foregoing descriptions that the ground station may send the target shared information to the target terminal in the receipt manner or the query feedback manner.

The first query information may be query information sent by the first terminal to the satellite to query the first rescue information, and the second query information may be query information sent by the second terminal to the satellite to query the second rescue information.

It should be noted that the first rescue information or the second rescue information may be one piece of help-seeking information, or may be a plurality of pieces of help-seeking information. This is not limited in this application.

For example, if the first help seeker sends the first help-seeking information to four rescuers at the same time, the first help seeker may receive a plurality of pieces of rescue information returned by a plurality of help seekers. For another example, if the first help seeker sends the first help-seeking information to one rescuer, the first help seeker may receive at least one piece of rescue information returned by one help seeker. In this application, the method for sending the target shared information is described only by using an example in which the first rescue information is rescue information returned by the first rescuer for the first help-seeking information and the second rescue information is rescue information returned by the second rescuer for the second help-seeking information. This should not be understood as a limitation on an application scenario of the method for sending the target shared information provided in this application.

The first rescue information may be reply information sent by the first rescuer to the ground station for the first help-seeking information, and the second rescue information may be reply information sent by the second rescuer to the ground station for the second help-seeking information. After receiving the first rescue information and the second rescue information, the ground station stores the first rescue information and the second rescue information in the message box. When the satellite sends query information (for example, the first query information or the second query information) to the ground station, the ground station obtains rescue information (for example, the first rescue information or the second rescue information) from the message box based on the query information (for example, the first query information or the second query information), and returns the rescue information (for example, the first rescue information or the second rescue information) to the satellite. The satellite then returns the received rescue information (for example, the first rescue information) to the help seeker (for example, the first help seeker or the second help seeker).

The first rescuer may be usually an emergency contact set by the first help seeker. Certainly, the first rescuer may alternatively be a person in charge of a group, for example, an administrator of an XXX scenic spot.

For example, after receiving the first help-seeking information (or the second help-seeking information) forwarded by the satellite, the ground station performs protocol conversion on the first help-seeking information (or the second help-seeking information), and forwards converted first help-seeking information (or second help-seeking information) to the first rescuer (or the second rescuer). For example, after receiving the first help-seeking information, a terminal corresponding to the first rescuer replies through a preset entry. The preset entry may be, for example, an SMS message platform or a rescue platform. The ground station and the terminal corresponding to the first rescuer may normally communicate with each other in a network environment. After receiving the first rescue information replied by the first rescuer by using a user terminal, the ground station caches the first rescue information in the message box. When the first help seeker sends the first query information to the ground station through the satellite by using the first terminal, the ground station obtains the first rescue information from the message box based on the first query information, and returns the first rescue information to the first terminal through the satellite.

It should be noted that an implementation in which the second help seeker queries the second rescue information by using the second terminal is similar to an implementation in which the first help seeker queries the first rescue information by using the first terminal. Details are not described herein again.

For example, the first terminal sends the first query information to the ground station through the satellite. The ground station queries, based on the first query information, whether the first rescue information exists in the message box. If the first rescue information does not exist, the ground station sends the target shared information to the first terminal. Similarly, the second terminal sends the second query information to the ground station through the satellite. The ground station queries, based on the second query information, whether the second rescue information exists in the message box. If the second rescue information does not exist, the ground station sends the target shared information to the second terminal.

For another example, the first terminal and the second terminal simultaneously send the first query information and the second query information to the ground station through the satellite. The ground station queries whether the first rescue information and the second rescue information exist in the message box based on the first query information and the second query information. If neither the first rescue information nor the second rescue information exists, the ground station sends the target shared information to the first terminal and the second terminal. If the first rescue information does not exist but the second rescue information exists, the ground station sends the target shared information to the first terminal and sends the second rescue information to the second terminal. If the first rescue information exists but the second rescue information does not exist, the ground station sends the first rescue information to the first terminal and sends the target shared information to the second terminal.

In this embodiment, when the ground station does not find the first rescue information (or the second rescue information) based on the first query information (or the second query information), it indicates that the ground station does not receive a reply from the first rescuer (or the second rescuer) for the first help-seeking information (or the second help-seeking information). In this case, the ground station may send the target shared information to the first terminal (or the second terminal), so that the first help seeker (or the second help seeker) corresponding to the first terminal (or the second terminal) selects a better gathering location based on a location of the first help seeker (or the second help seeker) and a location of another nearby help seeker, to help gather the nearby help seeker, thereby increasing a probability of mutual rescue between help seekers.

In another optional implementation, when finding the first rescue information based on the first query information, the ground station sends the first rescue information to the first terminal, and/or when finding the second rescue information based on the second query information, the ground station sends the second rescue information to the second terminal.

For example, the first terminal (or the second terminal) sends the first query information (or the second query information) to the ground station through the satellite. The ground station queries, based on the first query information (or the second query information), whether the first rescue information (or the second rescue information) exists in the message box. If the first rescue information (or the second rescue information) does not exist, the ground station sends the target shared information to the first terminal (or the second terminal).

For example, the first terminal and the second terminal simultaneously send the first query information and the second query information to the ground station through the satellite. The ground station queries, based on the first query information and the second query information, whether the first rescue information and the second rescue information exist in the message box. If the first rescue information and the second rescue information exist, the ground station sends the first rescue information to the first terminal, and sends the second rescue information to the second terminal.

In this embodiment, when finding the first rescue information based on the first query information, the ground station may send the first rescue information to the first terminal, so that the first help seeker corresponding to the first terminal can obtain the first rescue information in time; and/or when finding the second rescue information based on the second query information, the ground station may send the second rescue information to the second terminal, so that the second help seeker corresponding to the second terminal can obtain the second rescue information in time.

In an optional implementation, after sending the target shared information to the target terminal, the method further includes:
The ground station receives third help-seeking information from the first terminal, where the third help-seeking information includes third help-seeking content and the user identifier of the second terminal; and sends the third help-seeking information to the second terminal based on the user identifier of the second terminal.

The third help-seeking information is help-seeking information exchanged by the first terminal and the second terminal with the ground station through the satellite.

For example, the third help-seeking information may include but is not limited to the third help-seeking content (for example, being trapped and requesting food sharing), location information of the first terminal, and the user identifier of the second terminal.

After the ground station sends the target shared information to the first terminal in the receipt or query feedback manner, the first help seeker may learn of the help-seeking information of the second help seeker based on the target shared information. The first terminal may send the third help-seeking information to the ground station based on the user identifier of the second terminal through the satellite.

Similarly, the second help seeker may learn of the help-seeking information of the first help seeker based on the target shared information. The second terminal may send fourth help-seeking information to the ground station based on the user identifier of the first terminal through the satellite. The ground station may accurately forward interaction information between the first terminal and the second terminal based on the user identifier of the first terminal and the user identifier of the second terminal, so that bidirectional communication between the first terminal and the second terminal is established, information exchange between help seekers is implemented, and a probability of mutual rescue between the help seekers is increased.

In this embodiment, the ground station may accurately forward the third help-seeking information to the second terminal based on the user identifier of the second terminal in the third help-seeking information, instead of forwarding the third help-seeking information to another terminal, so that bidirectional communication between the first terminal and the second terminal is established, information exchange between help seekers is implemented, and the probability of mutual rescue between the help seekers is increased.

The foregoing describes the method 300 and the possible implementations in detail. The following further describes the method 300 and the possible implementations with reference to interface embodiments in different application scenarios.

When a first terminal sends first help-seeking information to a ground station through a satellite, a first help seeker needs to enable a personal information sharing function, to allow the ground station to share help-seeking information of the first help seeker with another nearby help seeker. The help-seeking information may include but is not limited to location information, help-seeking content, and help-seeking time.

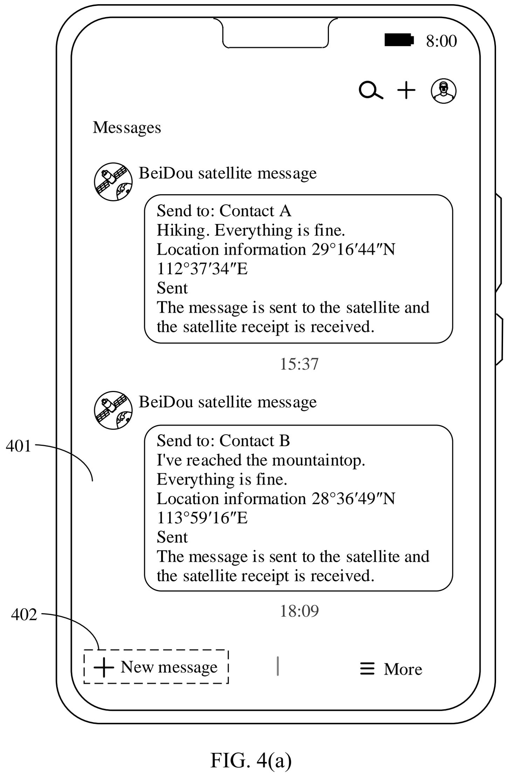

As shown in FIG. 4(a) to FIG. 4(d), the first help seeker may enable the personal information sharing function in the following manners:
Manner 1: The first help seeker may start a MeeTime application, and enable the personal information sharing function by using the MeeTime application.

The MeeTime application may provide a BeiDou satellite message service for a user (for example, a help seeker), and the user may implement bidirectional communication by using the MeeTime application when a network is unavailable.

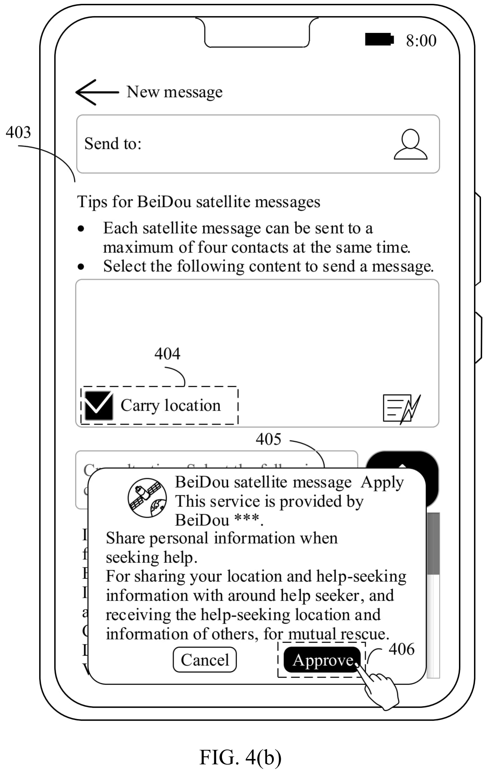

For example, as shown in FIG. 4(a) to FIG. 4(d), after the first help seeker enables the BeiDou satellite message service in the MeeTime application, the MeeTime application displays a BeiDou satellite message home screen 401 to the help seeker. The help seeker may send the first help-seeking information to a rescuer in the BeiDou satellite message home screen 401. When the first help seeker taps New message 402, the MeeTime application redirects from the BeiDou satellite message home screen 401 to a new message interface 403, as shown in FIG. 4(a). The first help seeker may edit the first help-seeking information in the new message interface 403. When editing the first help-seeking information in the new message interface 403, the first help seeker needs to tap a Carry location button 404. In this case, an interface 405 of "Sharing personal information when seeking help" is displayed in the new message interface 403. If the first help seeker selects an "Approve" button 406 in the interface 405, the first terminal carries location information of the first terminal when sending the first help-seeking information; otherwise, the first terminal does not carry the location information of the first terminal when sending the first help-seeking information, as shown in FIG. 4(b).

Manner 2: The first help seeker may alternatively enable the personal information sharing function by starting a BeiDou satellite message service official account.

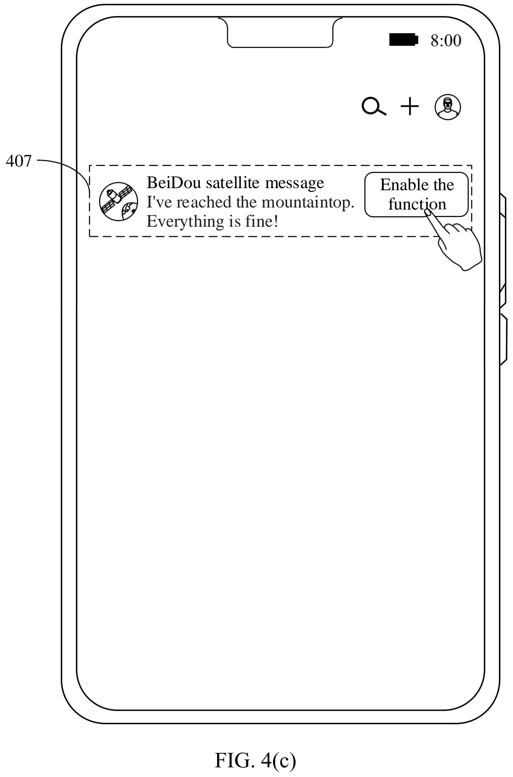

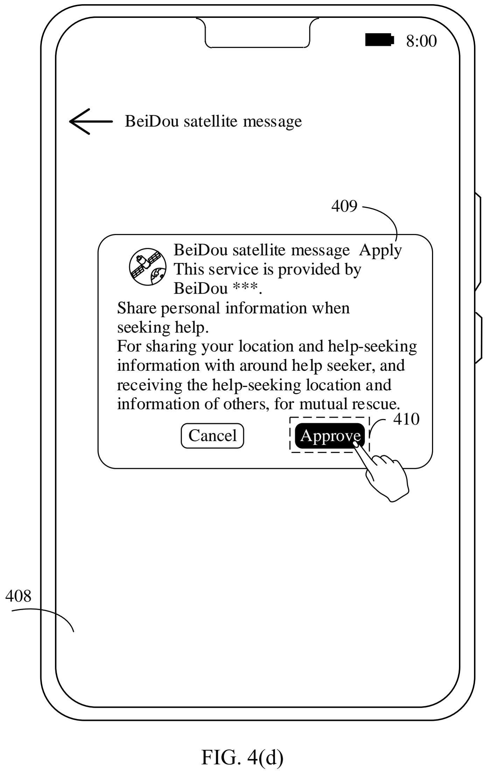

For example, as shown in FIG. 4(c), the first help seeker finds a BeiDou satellite message service official account 407 on social software (for example, chat software), and taps an Enable the function button to enter a BeiDou satellite message interface 408, as shown in FIG. 4(d). In this case, an interface 409 of "Sharing personal information when seeking help" is displayed in the BeiDou satellite message interface 408, as shown in FIG. 4(c). If the first help seeker selects an Approve button 410 in the interface 409, when the first terminal sends the first help-seeking information to the ground station through the satellite, the first help-seeking information carries first help-seeking content, first sending time, and first location information, as shown in FIG. 4(d).

Manner 3: The first help seeker may enable the personal information sharing function by starting a MeeTime assistant management application.

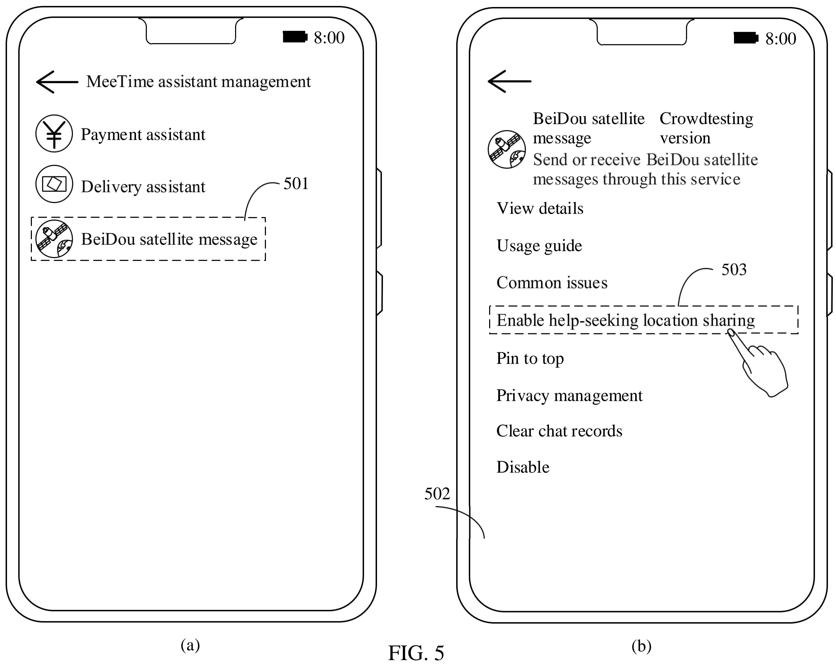

For example, as shown in (a) in FIG. 5, the first help seeker taps a BeiDou satellite message service account 501 in the MeeTime assistant management application, to enter a BeiDou satellite message setting interface 502. The user may tap an "Enable help-seeking location sharing" button 503 in the BeiDou satellite message setting interface 502. Then, when the first terminal sends the first help-seeking information to the ground station through the satellite, the first help-seeking information carries the first help-seeking content, the first sending time, and the first location information, as shown in (b) in FIG. 5.

In an optional embodiment, after enabling the personal information sharing function, the first help seeker may send the first help-seeking information to the satellite by using a satellite message service (for example, the BeiDou satellite message service) when the network is unavailable.

For example, the first terminal sends the first help-seeking information to the satellite by using satellite service information. After receiving the first help-seeking information, the satellite forwards the first help-seeking information to the ground station. The ground station performs protocol conversion on the first help-seeking information, and sends converted first help-seeking information to a terminal corresponding to a first rescuer. Similarly, a second terminal may also send second help-seeking information to a terminal corresponding to a second rescuer in a manner similar to that in which the first terminal sends the first help-seeking information.

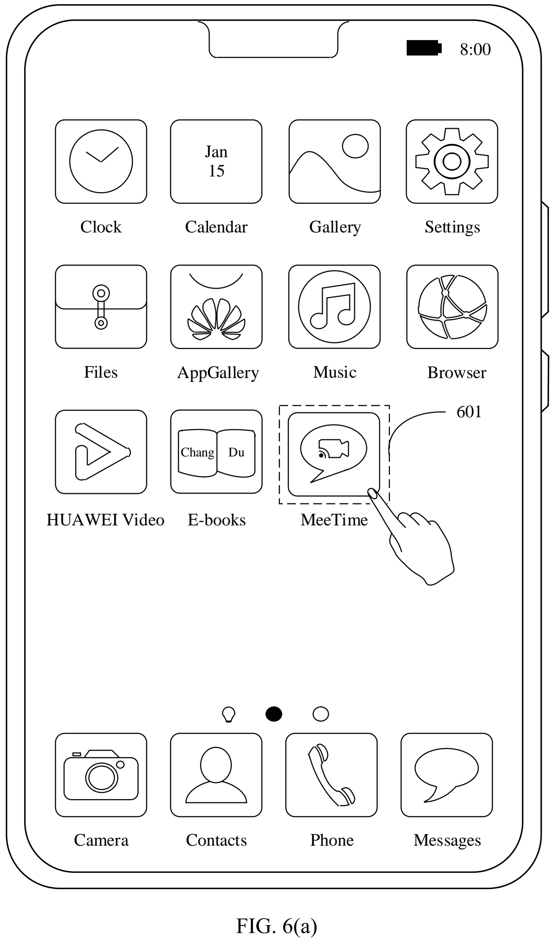

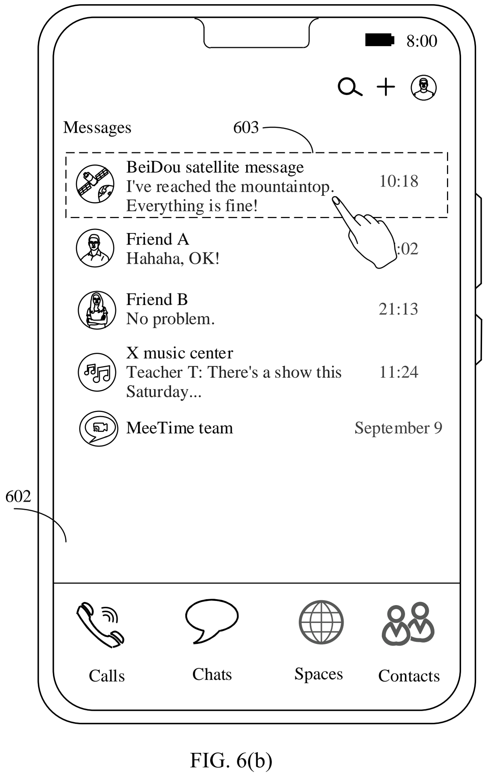

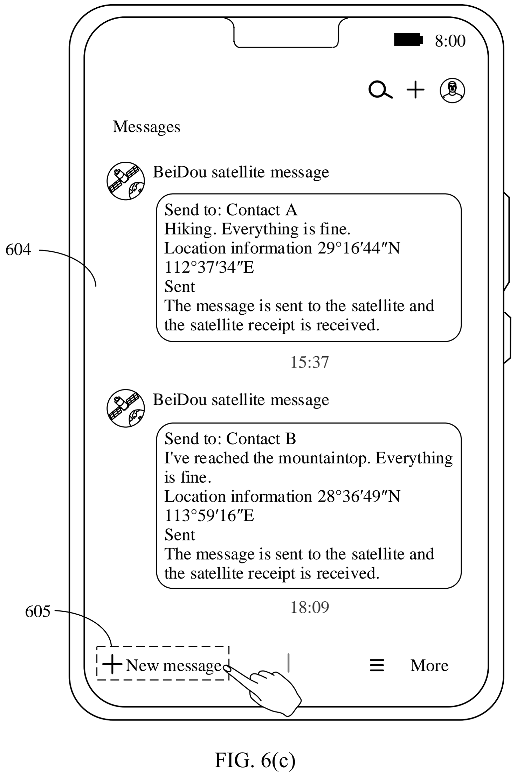

For example, as shown in FIG. 6(a), the first help seeker double-taps a shortcut icon 601 of the MeeTime application in an interface of a mobile phone, to open a main interface 602 of the MeeTime application. As shown in FIG. 6(b), the user may find a BeiDou satellite message service account 603 in the main interface 602, and tap to start the BeiDou satellite message service account 603. In this case, the mobile phone redirects from the main interface 602 to a BeiDou satellite message interface 604, as shown in FIG. 6(c). In the BeiDou satellite message interface 604, a previously sent BeiDou satellite message is displayed. For example, in the BeiDou satellite message interface 604, BeiDou satellite messages previously sent by the first help seeker to a contact A and a contact B are displayed, as shown in FIG. 6(c).

When the first help seeker wants to send the first help-seeking information to the first rescuer, the first help seeker may tap a "New message" button 605 in the BeiDou satellite message interface 604 to create the first help-seeking information, as shown in FIG. 6(c). After the first help seeker taps the "New message" button 605, a "new message" interface 606 is opened. The user may select a Carry location option 607, so that when the first help seeker sends the first help-seeking information by using the mobile phone, the first help-seeking information carries the location information of the first help seeker. After selecting the Carry location option 607, the user may enter, in a text input box 608, help-seeking content to be sent, or may select, from a short sentence set provided by the BeiDou satellite message service, help-seeking content to be sent. This is not limited in this application. It should be noted that the short sentence set is a sentence set preset by the BeiDou satellite message service in advance. A help seeker may directly select, from the short sentence set as help-seeking content, content to be sent, without re-editing.

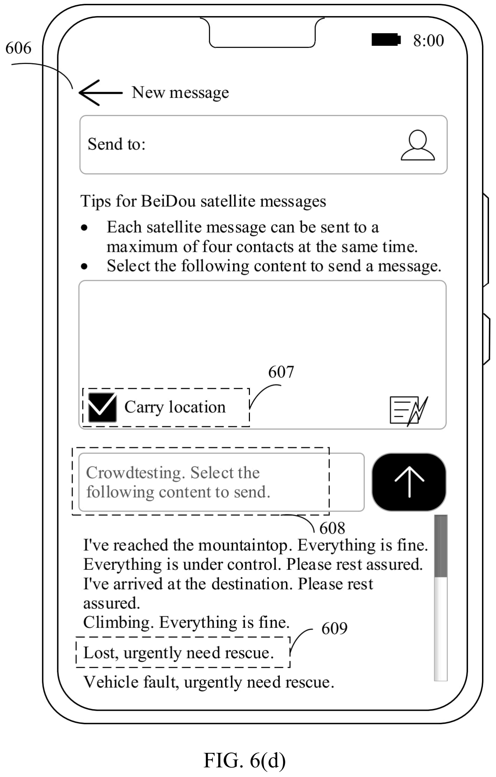

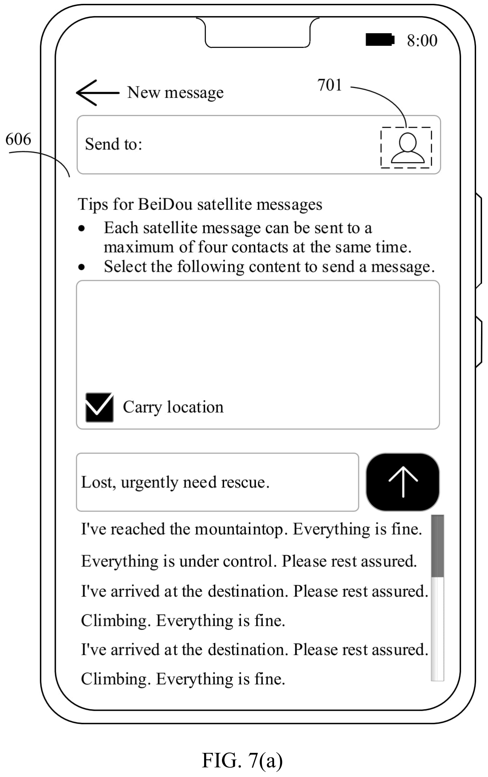

For example, the first help seeker may select "Lost, urgently need rescue" in the text input box 608 as the first help-seeking content, as shown in 609 in FIG. 6(d). Then, as shown in FIG. 7(a), the first help seeker opens a "Contacts" option 701. In this case, the mobile phone redirects from the "new message" interface 606 to a "contact selection" interface 702. Because "Tips for BeiDou satellite" in the "new message" interface 606 indicate that each satellite message can be sent to a maximum of four contacts at the same time, the first help seeker may select to send the first help-seeking information to a maximum of four contacts at the same time in the "contact selection" interface 702.

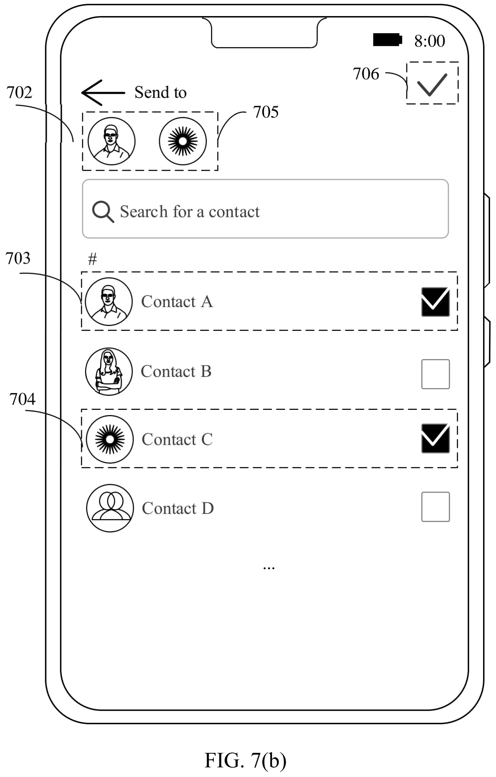

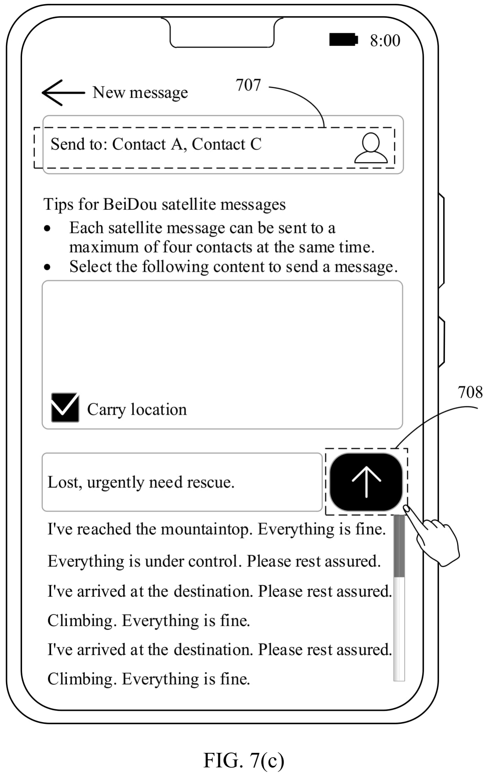

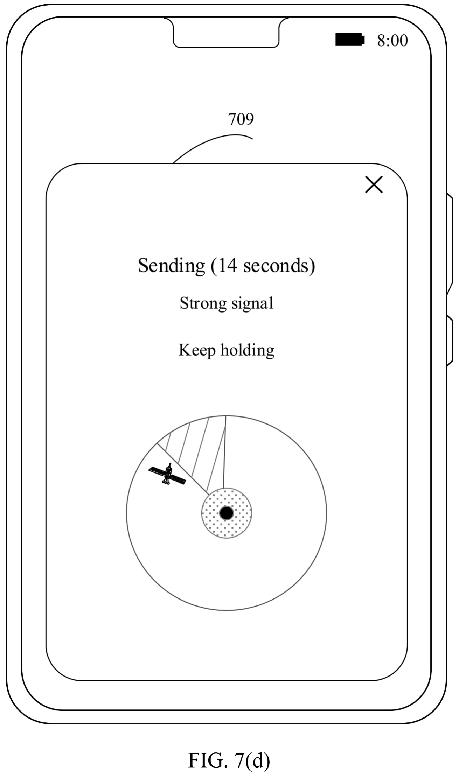

For example, the first help seeker selects to send the first help-seeking information to both a contact A (as shown in 703 in FIG. 7(b)) and a contact C (as shown in 704 in FIG. 7(b)) in the "contact selection" interface 702. In this case, the contact A and the contact C are displayed at a position shown in 705 in FIG. 7(b). The first help seeker taps a "√" option 706, and the mobile phone returns from the "contact selection" interface 702 to the "new message" interface 606. As shown in 707 in FIG. 7(c), the contact A and the contact C appear in a "send to contact" box 707 in the "new message" interface 606. The first help seeker may tap a "send" button 708, and the first terminal (for example, the mobile phone) sends the first help-seeking information to the contact A and the contact C through the satellite and the ground station. As shown in 709 in FIG. 7(d), prompt information "Sending (14 seconds)" is displayed in the interface of the mobile phone. The first help-seeking information includes the first sending time (for example, 19:08), the location information (for example, latitude and longitude information) of the first help seeker, and the first help-seeking content (for example, lost, urgently need rescue).

The first help seeker sends the first help-seeking information to the satellite by using the mobile phone. After receiving the first help-seeking information, the satellite forwards the first help-seeking information to the ground station. After receiving the first help-seeking information, the ground station performs protocol conversion on the first help-seeking information to obtain converted first help-seeking information. The ground station sends the converted first help-seeking information to the contact A and the contact C. The ground station may communicate with the contact A and the contact C in a normal network environment. After receiving the first help-seeking information, the contact A and the contact C may reply to the first help-seeking information at a preset entry. The preset entry includes but is not limited to an SMS message platform, a rescue platform, a satellite service micro-platform, and the MeeTime application.

Similarly, the second terminal may also send the second help-seeking information to the second rescuer in a manner similar to a manner in which the first terminal sends the first help-seeking information to the first rescuer through the satellite and the ground station.

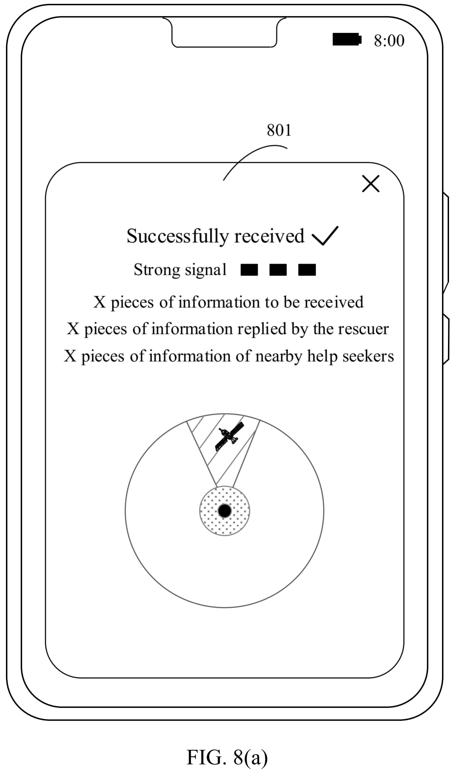

After the mobile phone sends the first help-seeking information to the satellite, the satellite sends receipt information to the mobile phone. The receipt information indicates whether the mobile phone successfully sends the first help-seeking information to the satellite. Optionally, when the receipt information sent by the satellite to the mobile phone indicates that the first help-seeking information is successfully sent, the mobile phone receives receipt information "Sent" in a satellite message receiving interface. Correspondingly, a received signal strength, a quantity of pieces of information to be received, a quantity of pieces of information replied by the first rescuer, and a quantity of pieces of help-seeking information of nearby help seekers may be displayed in a receiving interface in which the first rescuer receives the first help-seeking information. For example, as shown in 801 in FIG. 8(a), the first rescuer may view signal strength, X pieces of information to be received, X pieces of information replied by the rescuer, and X pieces of information of nearby help seekers in a receiving interface 801.

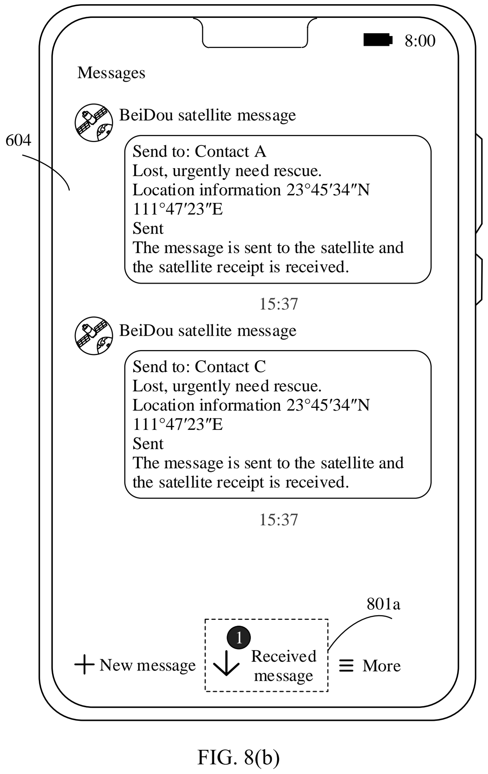

For example, as shown in FIG. 8(b), the first help seeker may view, in the BeiDou satellite message interface 604, that the first help-seeking content of the first help-seeking information sent to the contact A is "Lost, urgently need rescue", the first sending time is "15:37", the first location information is "23°45'34"N 111 °47'23"E", "The message is sent to the satellite and the satellite receipt is received", and the like. The first help seeker may further view a quantity of newly received messages in the BeiDou satellite message interface 604, as shown in 801a in FIG. 8(b).

Correspondingly, after receiving the first help-seeking information, the first rescuer may view the first help-seeking information in the following manners:
Manner 1: When the first rescuer also uses the MeeTime application, the first rescuer may receive and view the first rescue information by using the MeeTime application.

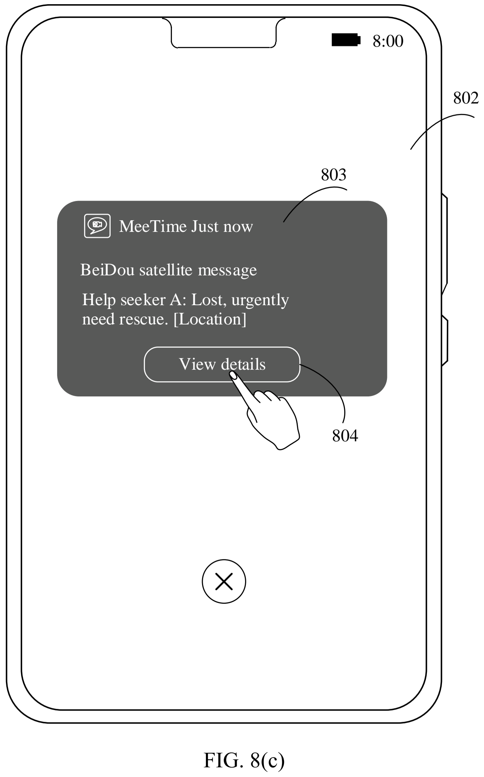

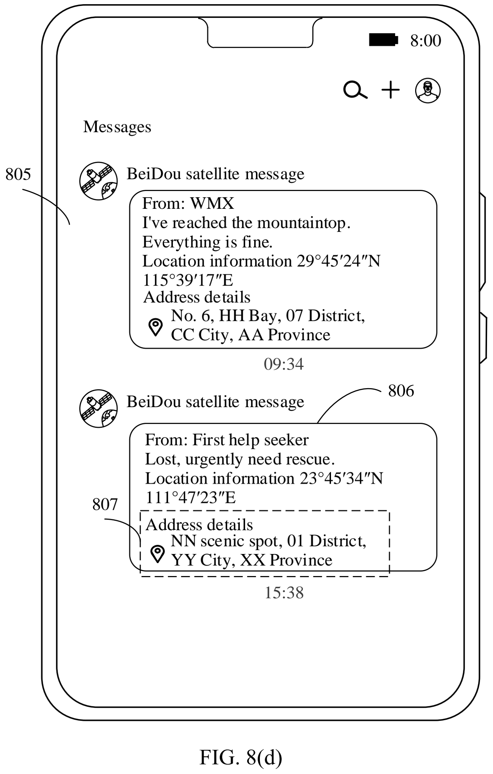

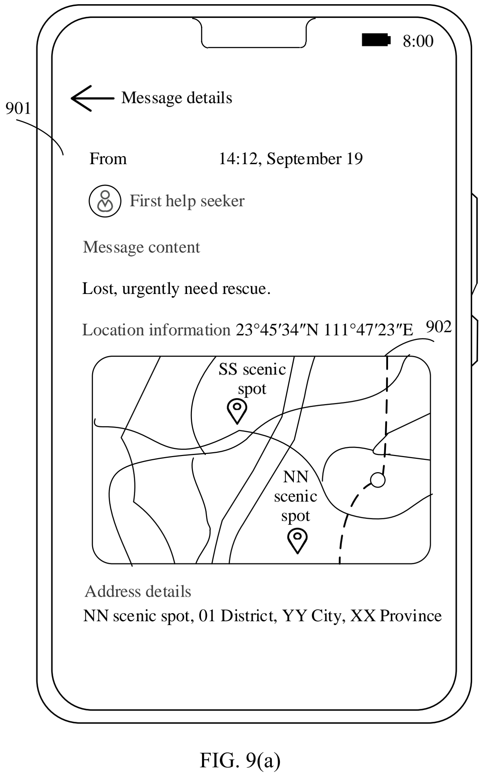

For example, as shown in FIG. 8(c), when the first rescuer receives the first help-seeking information by using the MeeTime application, the MeeTime application displays prompt information 803 "BeiDou satellite message" in a mobile phone interface 802 of the first rescuer. The first rescuer may tap a "View details" button 804 to open a BeiDou satellite message interface 805 to view the first help-seeking information sent by the first help seeker, as shown in 806 in FIG. 8(d). For example, the first rescuer may view the first help-seeking content (for example, lost, urgently need rescue) sent by the first help seeker, the first location information (for example, 23°45'34"N 111°47'23"E), address details (for example, NN scenic spot, 01 District, YY City, XX Province), and time (for example, 15:38) at which the first help-seeking information is received. If the first rescuer taps an "Address details" link 807, a "message details" interface 901 may be opened, as shown in FIG. 9(a). A specific location of the NN scenic spot corresponding to the first location information on a map 902 is displayed in the "message details" interface 901.

Manner 2: When the first rescuer does not use the MeeTime application, the first rescuer may receive and view the first help-seeking information by using an SMS message platform.

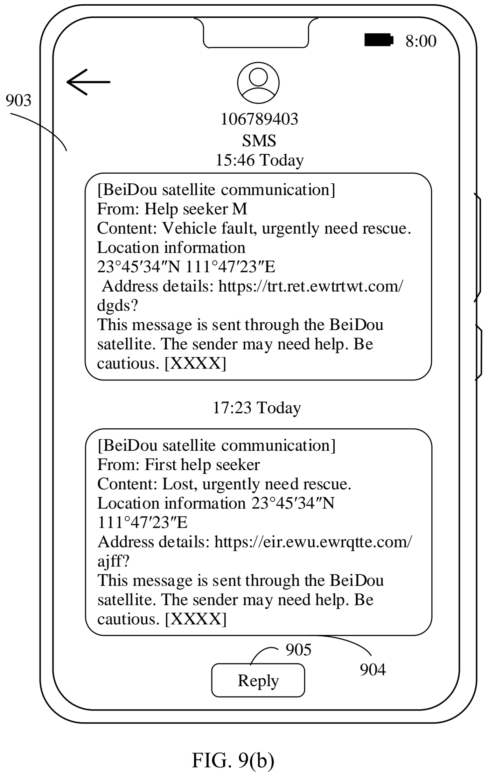

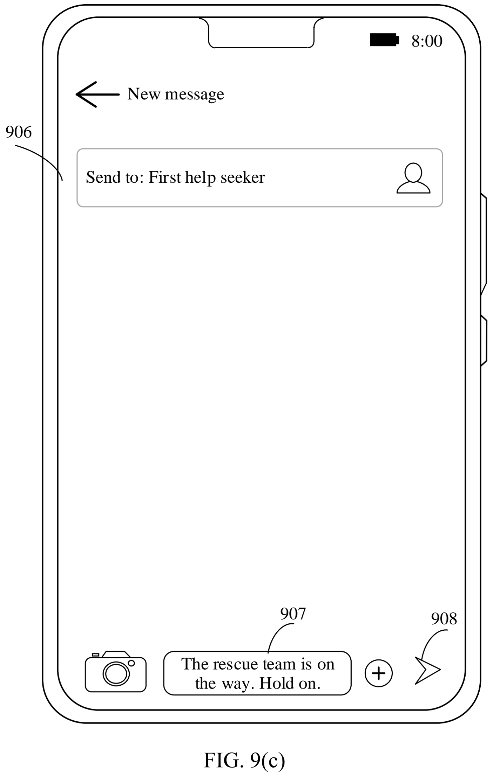

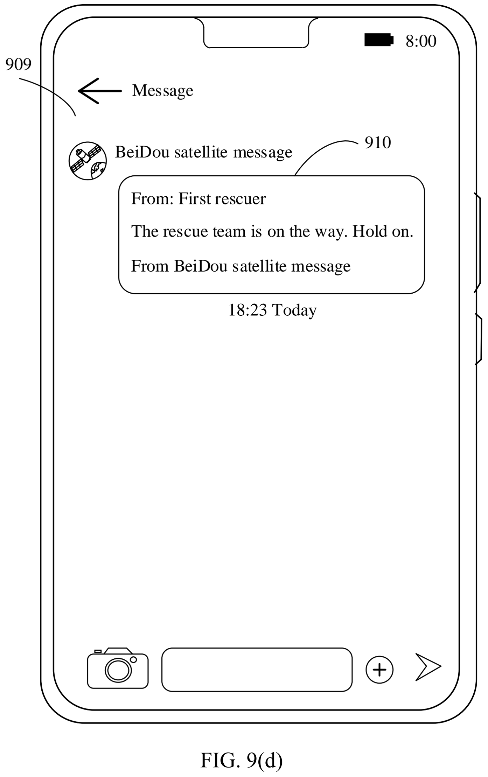

For example, when the first rescuer does not use the MeeTime application, the first rescuer may receive the first help-seeking information by using an SMS message, and the first rescuer may receive and view the first help-seeking information by using the SMS message. As shown in FIG. 9(b), the first rescuer may open an SMS message viewing and editing interface 903 to view the first help-seeking information 904 from the first help seeker. The first rescuer taps a "Reply" button 905 to reply to the first help-seeking information. After the first help seeker taps the Reply button 905, a message editing interface 906 is opened, as shown in FIG. 9(c). The first rescuer may enter first rescue information "The rescue team is on the way. Hold on" in an input box 907, and tap a button 908 to send the first rescue information to the ground station. The ground station may forward the first rescue information to the first help seeker through the satellite. Correspondingly, the first help seeker may view first rescue information 910 from the first rescuer in an interface 909 shown in FIG. 9(d).

In another optional embodiment, the first terminal sends the first help-seeking information to the satellite by using the satellite service information. After receiving the first help-seeking information, the satellite forwards the first help-seeking information to the ground station. Similarly, the second terminal sends the second help-seeking information to the satellite by using the satellite service information. After receiving the second help-seeking information, the satellite forwards the second help-seeking information to the ground station.

After receiving the first help-seeking information and the second help-seeking information, the ground station separately performs protocol conversion on the first help-seeking information and the second help-seeking information, and then sends the converted first help-seeking information to the first rescuer and sends the converted second help-seeking information to the second help seeker. In addition, the ground station performs the method 300 based on the first help-seeking information and the second help-seeking information to obtain the target shared information. The ground station may send the target shared information to the first help seeker and the second help seeker in a receipt manner, or may send the target shared information to the first terminal or the second terminal in response to first query information or second query information.

Correspondingly, the first help seeker or the second help seeker may receive the target shared information by using the MeeTime application, or receive the target shared information by using the SMS message platform, or receive the target shared information by using the rescue platform. Certainly, the target shared information may alternatively be received by using another application that can receive a satellite message. This is not limited in this application.

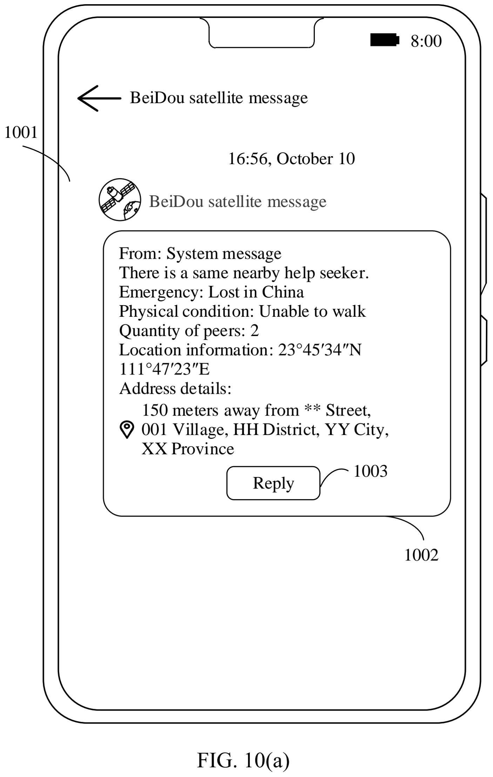

FIG. 10(a) to FIG. 10(d) are a diagram of an interface in which a help seeker receives target shared information. After the ground station receives the first help-seeking information and the second help-seeking information, the ground station performs the method 300 based on the first help-seeking information and the second help-seeking information to generate the target shared information.

For example, the ground station sends the target shared information to the first terminal in a receipt manner. The ground station sends the target shared information to the first terminal in a form of system message in the receipt manner. When the first terminal receives the target shared information, the first help seeker views an interface 1001 shown in FIG. 10(a). A system message 1002 received from the BeiDou satellite message service is displayed in the interface 1001, and the system message 1002 includes but is not limited to a quantity of peers and location information. After viewing the system message 1002, the first help seeker may learn of that there is a same nearby help seeker. The first help seeker may further contact the another help seeker (for example, the second help seeker) through a reply entry 1003 of the BeiDou satellite message service, to learn of a current trapped situation of each other.

For another example, when the first terminal sends the first help-seeking information to the ground station through the satellite a plurality of times, the target shared information generated by the ground station may include but is not limited to the first help-seeking information sent for the first time and a total quantity of help-seeking times.

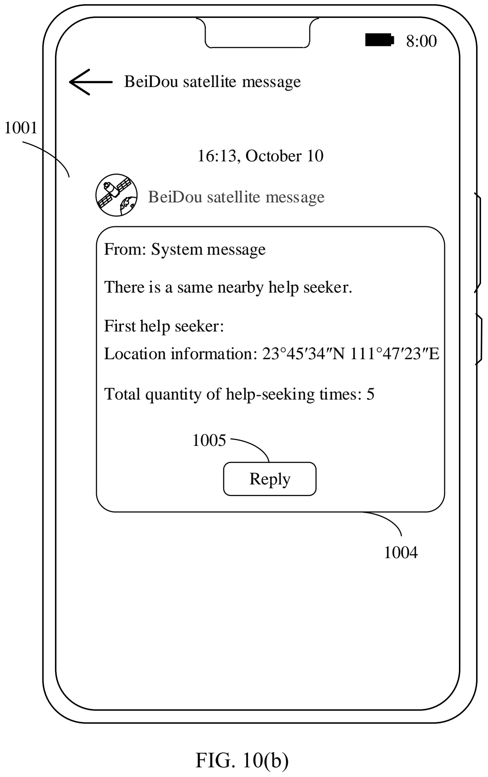

For example, in an interface 1001 shown in FIG. 10(b), when the target shared information 1004 includes the location information of the first help seeker and the total quantity of help-seeking times of the first help seeker (for example, the total quantity of help-seeking times is 5), the target shared information 1004 received by the second help seeker includes the location information of the first help seeker and the total quantity of help-seeking times of the first help seeker. The second help seeker may further communicate with the first help seeker through a reply entry 1005 of the BeiDou satellite message service, to learn of a trapped situation of each other.

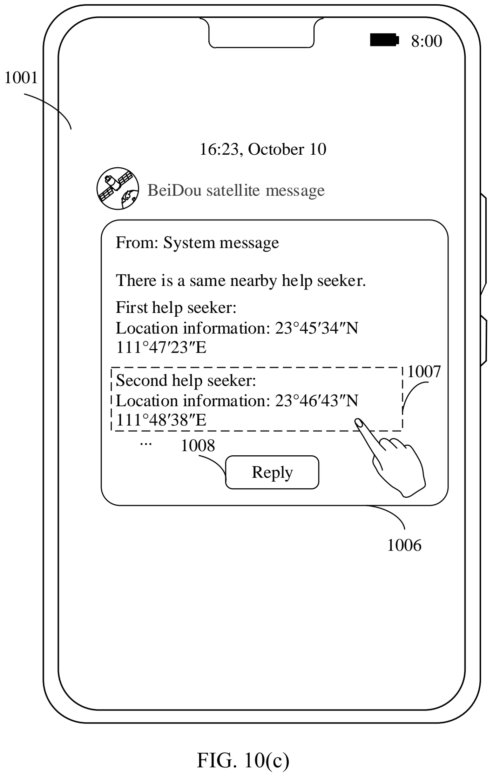

For another example, when there are a large quantity of help seekers within a second preset time period, the target shared information generated by the ground station may include location information of each help seeker. For example, the target shared information includes the location information of the first help seeker and the location information of the second help seeker. As shown in FIG. 10(c), the target shared information 1006 received by the first help seeker is displayed in the interface 1001, and it can be learned that the target shared information 1006 includes the location information of the first help seeker, the location information of the second help seeker, and location information of another help seeker (as shown by an ellipsis in FIG. 10(c)). The first help seeker may select one of the help seekers to reply. For example, the first help seeker may select information 1007 of the second help seeker, and reply to the second help seeker through a reply entry 1008. Finally, reply information of the first help seeker is forwarded through the satellite and the ground station, and arrives at the second terminal corresponding to the second help seeker.

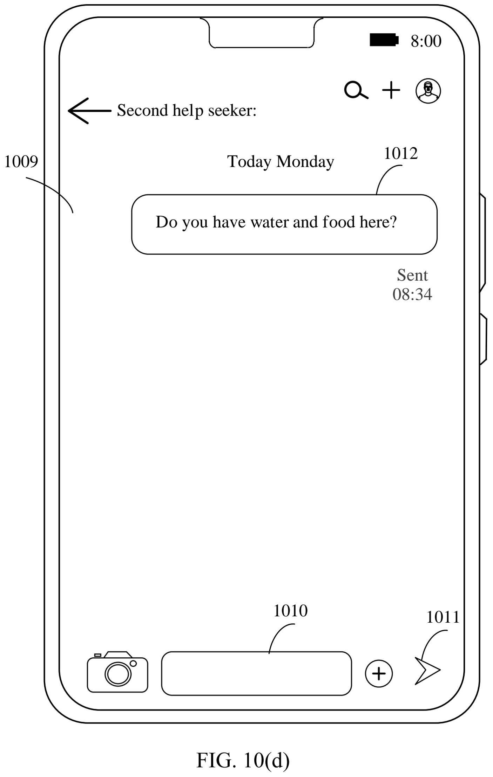

For example, after the first help seeker taps the Reply button 1008, a message sending interface 1009 is opened. The first help seeker may enter information to be sent to the second help seeker in a text input box 1010 in the message sending interface 1009, as shown in FIG. 10(d).

For example, the first help seeker enters help-seeking content "Do you have water and food here?" in the text input box 1010, and then may tap a send button 1011 to send the help-seeking content to the second help seeker, as shown in FIG. 10(d).

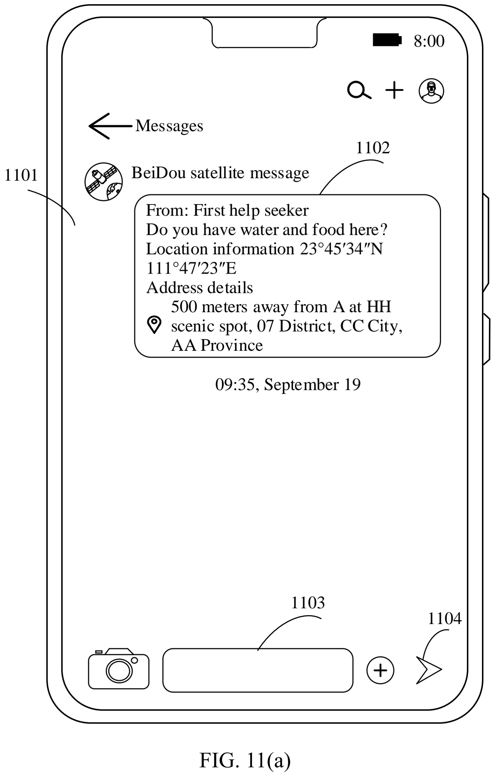

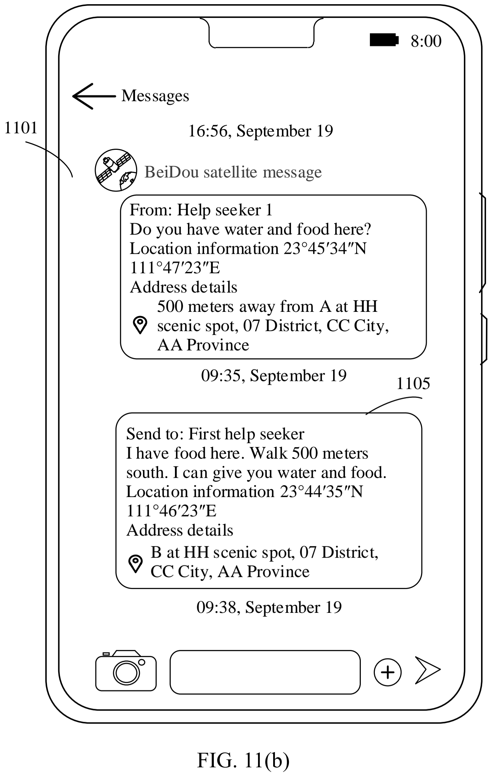

Correspondingly, the second help seeker may receive the reply information of the first help seeker by using the BeiDou satellite message service. For example, as shown in an interface 1101 in FIG. 11(a), the second help seeker may view a BeiDou satellite message 1102 sent by the first help seeker. The second help seeker may reply to the help-seeking content of the first help seeker in a text input box 1103 (for example, enter "I have food here. Walk 500 meters south. I can give you water and food"), and may tap, after completing entering, a send button 1104 to send the information to the first help seeker. In this case, information 1105 just replied by the second help seeker is displayed in the interface 1101, as shown in FIG. 11(b). The information 1105 may include reply content, location information, and address details of the second help seeker.

In another optional embodiment, in addition to sending the first help-seeking information to the first rescuer, the first help seeker may send the first help-seeking information through the rescue platform.

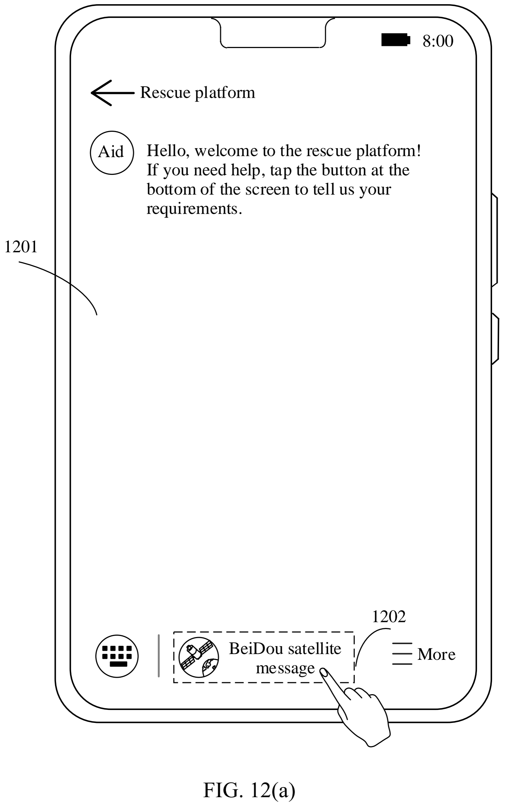

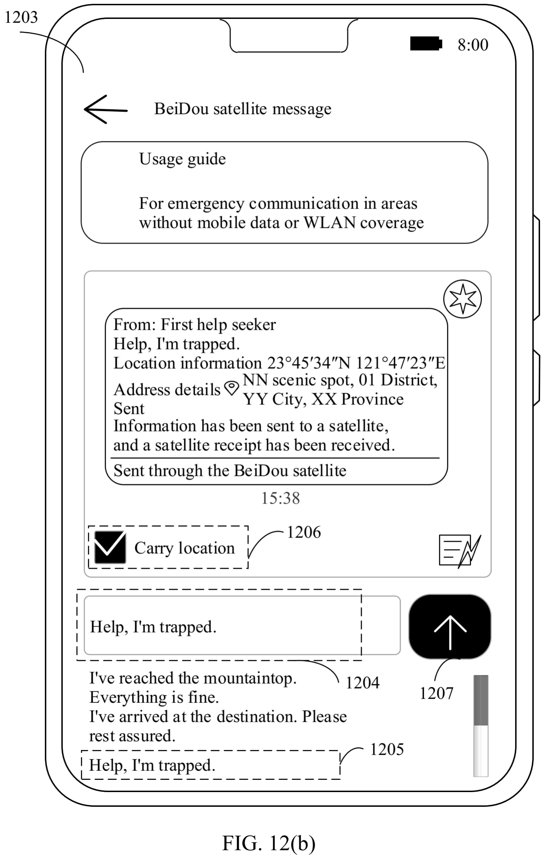

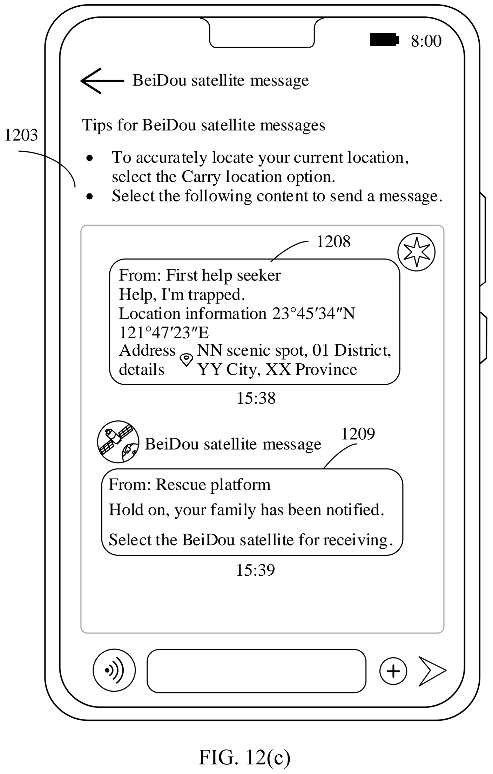

For example, as shown in FIG. 12(a), the first help seeker may send help-seeking information to the rescue platform by using a BeiDou satellite message service in a home screen 1201 of the rescue platform. The first rescuer may tap a "BeiDou satellite message" option 1202 to open an interface 1203 of the BeiDou satellite message service. The first help seeker may select help-seeking content to be sent in a text input box 1204, for example, select "Help, I'm trapped", as shown in 1205 in FIG. 12(b). The first help seeker selects a "Carry location" option 1206, and then taps a send button 1207. The first terminal may send the help-seeking content to the rescue platform, as shown in 1208 in FIG. 12(c). After receiving the help-seeking information sent by the first help seeker, the rescue platform may reply to the help-seeking information.

When the rescue platform replies to the first help seeker with information, the first help seeker may view the reply information in the interface 1203. For example, as shown in FIG. 12(c), the first help seeker may view reply information 1209 from the rescue platform.

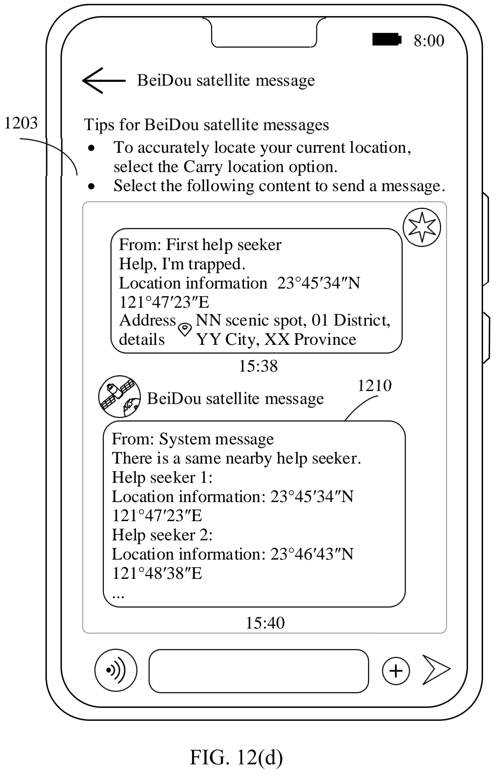

In an optional implementation, the first help seeker may further receive information of another nearby help seeker by using the BeiDou satellite message service of the rescue platform. For example, the ground station may send the target shared information to the first help seeker in a form of system information by using the rescue platform. As shown in 1210 in FIG. 12(d), the first help seeker may view the system message 1210 in the interface 1203. The first help seeker may learn of the information of the nearby help seeker based on the system message 1210.

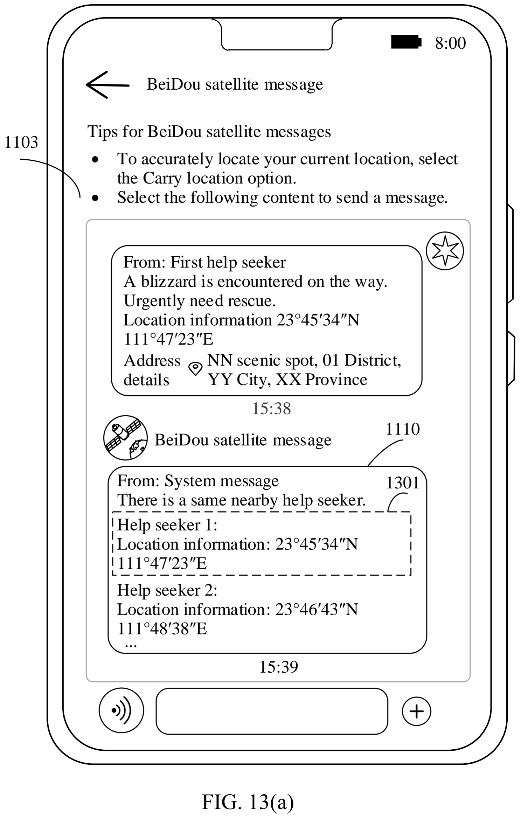

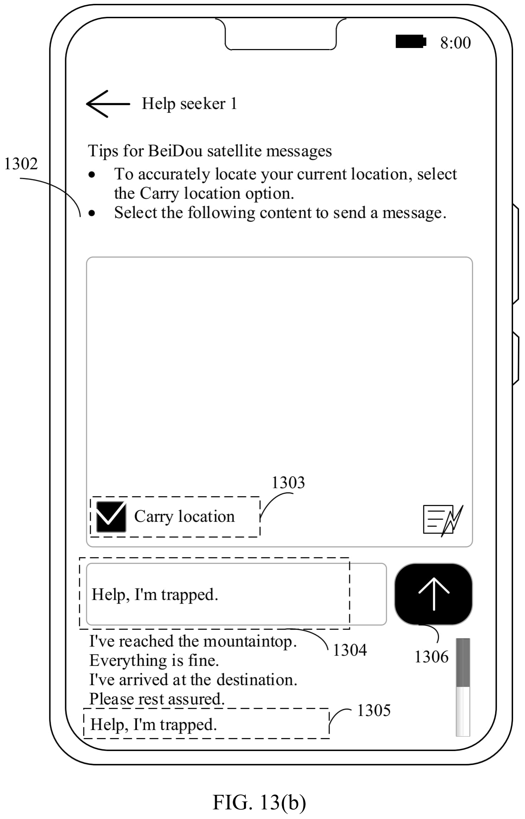

The first help seeker may select information of a help seeker 1 (as shown in 1301 in FIG. 13(a)) to reply to the help seeker 1. In this case, the first terminal (for example, the mobile phone) opens an interface 1302, as shown in FIG. 13(b). The first help seeker replies to the help seeker 1 in the interface 1302. For example, as shown in FIG. 13(b), a "Carry location" option 1303 is selected. In this way, when the first terminal sends information, location information of the first terminal may be carried. The first help seeker may select, in a text input box 1304, content to be sent to the help seeker 1, for example, content 1305 "Help, I'm trapped". The first help seeker may tap a send button 1306 to send the help-seeking content to the help seeker 1.

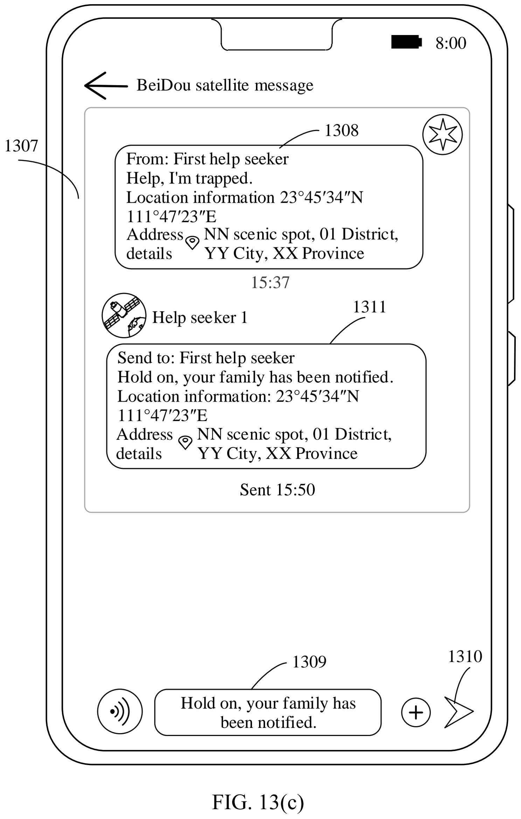

Correspondingly, as shown in FIG. 13(c), the help seeker 1 opens a BeiDou satellite message interface 1307, and the help seeker 1 may view information 1308 from the first help seeker in the BeiDou satellite message interface 1307. For example, the help seeker 1 obtains rescue information from the ground station and has been rescued. In this case, the help seeker 1 may enter reply information Y "Hold on, your family has been notified" in a text input box 1309, and the help seeker 1 may tap a send button 1310 to send the reply information Y to the first help seeker. The help seeker 1 taps the send button 1310, and a terminal 1 corresponding to the help seeker 1 sends the reply information Y to the first terminal. A form of interface after the terminal 1 sends the reply information is shown in 1311 in FIG. 13(c).

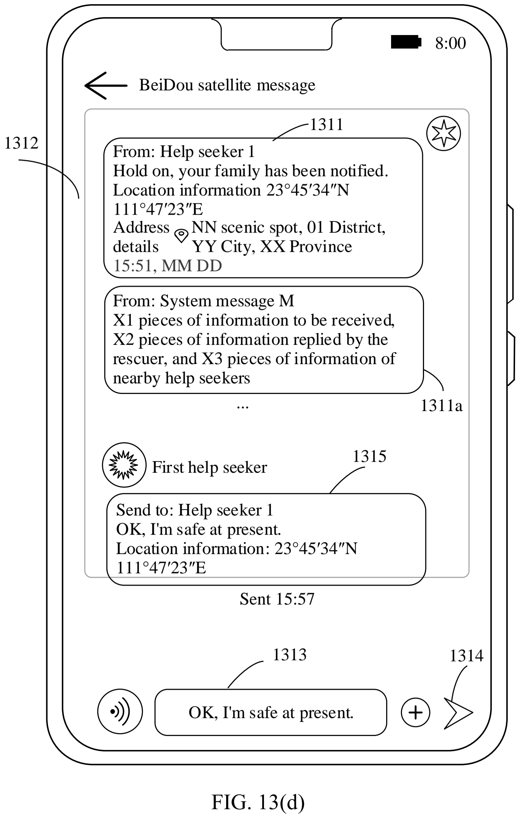

As shown in FIG. 13(d), reply information 1311 sent by the help seeker 1 is received in a BeiDou satellite message interface 1312 of the terminal 1 (for example, a mobile phone 1) corresponding to the first help seeker. Optionally, the ground station may also send a quantity of pieces of information to be received, a quantity of pieces of information replied by the rescuer, and a quantity of pieces of information of nearby help seekers to the help seeker 1 through the satellite. For example, as shown in 1311a in FIG. 13(d), the first rescuer may view a system message M in the interface 1312 in this case. The system message M indicates X1 pieces of information to be received, X2 pieces of information replied by the rescuer, and X3 pieces of information of nearby help seekers. The first help seeker may continue to wait for receiving. After the first help seeker completes receiving the information, the first help seeker may enter reply information X "OK, I'm safe at present" in a text input box 1313, and tap a send button 1314 after completing editing the reply information X. The terminal 1 sends the reply information X to the help seeker 1. In this case, after the terminal 1 successfully sends the reply information X, a display form of the reply information X in the interface 1312 is shown in 1315 in FIG. 13(d).

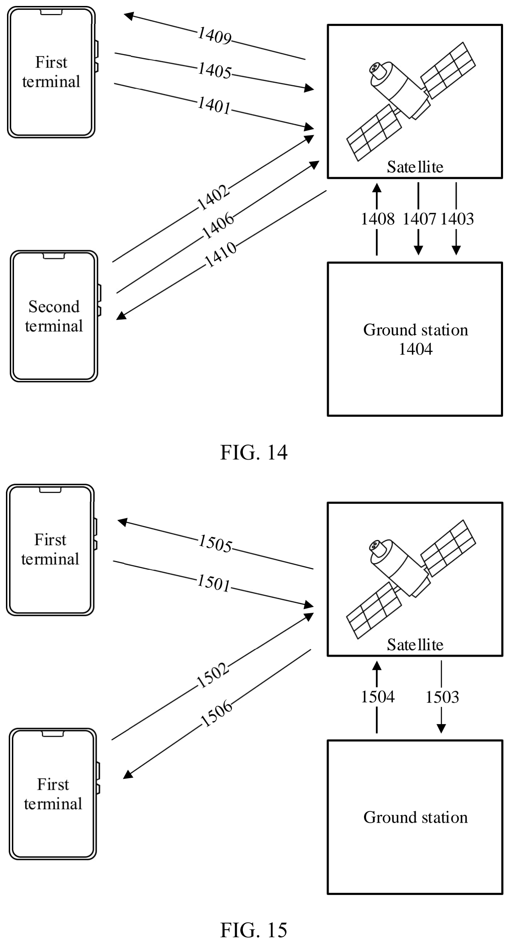

For ease of understanding, the following describes interaction procedure steps of a method for sending target shared information with reference to FIG. 14 to FIG. 16.

FIG. 14 is a diagram of an interaction procedure of a method for sending target shared information. A first terminal and a second terminal are used as an example to describe interaction procedure steps of the method for sending the target shared information.

Step 1401: The first terminal sends first help-seeking information to a satellite.

Step 1402: The second terminal sends second help-seeking information to the satellite.

It should be noted that step 1401 and step 1402 may be performed simultaneously, or may be performed sequentially. This is not limited in this application.

Step 1403: The satellite sends the first help-seeking information and/or the second help-seeking information to a ground station.

Step 1404: The ground station separately generates information of the first terminal and information of the second terminal for the first terminal and the second terminal based on the first help-seeking information and the second help-seeking information. For example, the ground station may generate target shared information A based on the first help-seeking information, where the target shared information A includes help-seeking information of the first terminal. Similarly, the ground station may generate target shared information B based on the second help-seeking information, where the target shared information B includes help-seeking information of the second terminal. The ground station may send the target shared information A to the second terminal in a receipt manner or a query feedback manner, and send the target shared information A to the first terminal in a receipt manner or a query feedback manner, to implement location information sharing between the first terminal and the second terminal.

Step 1405: The first terminal pulls first rescue information from the satellite by using a receiving function of a satellite service message (for example, a BeiDou satellite service message). For example, the first terminal sends first query information to the satellite.

Step 1406: The second terminal pulls second rescue information from the satellite by using the receiving function of the satellite service message (for example, the BeiDou satellite service message). For example, the second terminal sends second query information to the satellite.

It should be noted that step 1405 and step 1406 may be performed simultaneously, or may be performed sequentially. This is not limited in this application.

Step 1407: The satellite sends the first query information and/or the second query information to the ground station.

Step 1408: The ground station queries the first rescue information based on the first query information, and/or the ground station queries the second rescue information based on the second query information. When the first rescue information and/or the second rescue information are/is not found, the ground station returns the target shared information A to the second terminal, and/or returns the target shared information B to the first terminal.

Step 1409: The satellite returns the target shared information A to the first terminal, and/or step 1410: The satellite returns the target shared information B to the second terminal.

FIG. 15 is a diagram of an interaction procedure of another method for sending target shared information. A first terminal and a second terminal are used as an example to describe interaction procedure steps of the method for sending the target shared information.

Step 1501: The first terminal sends first help-seeking information to a satellite.

Step 1502: The second terminal sends second help-seeking information to the satellite.

It should be noted that step 1501 and step 1502 may be performed simultaneously, or may be performed sequentially. This is not limited in this application.

Step 1503: The satellite sends the first help-seeking information and/or the second help-seeking information to a ground station.

Step 1504: The ground station performs the method 300 based on the first help-seeking information and the second help-seeking information, to generate target shared information X; the ground station separately generates corresponding receipt information A and receipt information B for the first terminal and the second terminal based on the first help-seeking information and the second help-seeking information; and the ground station returns the receipt information A carrying the target shared information X to the satellite, and/or the ground station returns the receipt information B carrying the target shared information X to the satellite.

Step 1505: The satellite sends the receipt information A carrying the target shared information X to the first terminal, and/or step 1506: The satellite sends the receipt information B carrying the target shared information X to the second terminal.

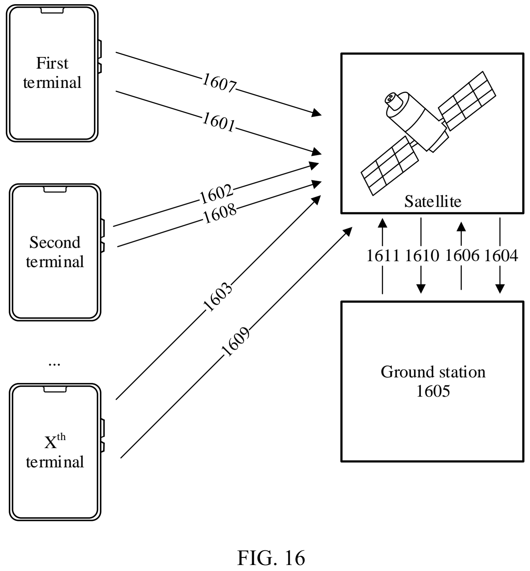

FIG. 16 is a diagram of an interaction procedure of still another method for sending target shared information. A first terminal, a second terminal, ..., and an X^{th} terminal are used as an example to describe interaction procedure steps of the method for sending the target shared information, where X is a positive integer greater than 2.

Step 1601: The first terminal sends first help-seeking information to a satellite.

Step 1602: The second terminal sends second help-seeking information to the satellite.

Step 1603: The X^{th} terminal sends X^{th} help-seeking information to the satellite.

It should be noted that step 1601, step 1602, and step 1603 may be performed simultaneously, or may be performed sequentially. This is not limited in this application.

Step 1604: The satellite sends the first help-seeking information, the second help-seeking information, ..., and the X^{th} help-seeking information to a ground station.

Step 1605: The ground station generates target shared information based on the first help-seeking information, the second help-seeking information, ..., and the X^{th} help-seeking information, and stores the target shared information in a message box (for example, caches the target shared information in a message box corresponding to the first terminal), where the target shared information includes a group identifier and user identifiers of terminals (for example, the first terminal, the second terminal, ..., and the X^{th} terminal).

Step 1606: The ground station returns corresponding receipt information A, receipt information B, ..., and receipt information X to the first terminal, the second terminal, ..., and the X^{th} terminal based on the first help-seeking information, the second help-seeking information, ..., and the X^{th} help-seeking information.

Step 1607: The first terminal pulls first rescue information from the satellite by using a receiving function of a satellite service message (for example, a BeiDou satellite service message). For example, the first terminal sends first query information to the satellite.

Step 1608: The second terminal pulls second rescue information from the satellite by using the receiving function of the satellite service message (for example, the BeiDou satellite service message). For example, the second terminal sends second query information to the satellite.

Step 1609: The X^{th} terminal pulls X^{th} rescue information from the satellite by using the receiving function of the satellite service message (for example, the BeiDou satellite service message). For example, the X^{th} terminal sends X^{th} query information to the satellite.

It should be noted that step 1607, step 1608, and step 1609 may be performed simultaneously, or may be performed sequentially. This is not limited in this application.

Step 1610: The satellite sends the first query information, the second query information, ..., and the X^{th} query information to the ground station.

Step 1611: The ground station queries the first rescue information based on the first query information, queries the second rescue information based on the second query information, ..., and queries the X^{th} rescue information based on the X^{th} query information. When the first rescue information, the second rescue information, ..., and the X^{th} rescue information are not found, the ground station returns the target shared information to the first terminal through the satellite, returns the target shared information to the second terminal through the satellite, ..., and returns the target shared information to the X^{th} terminal through the satellite.

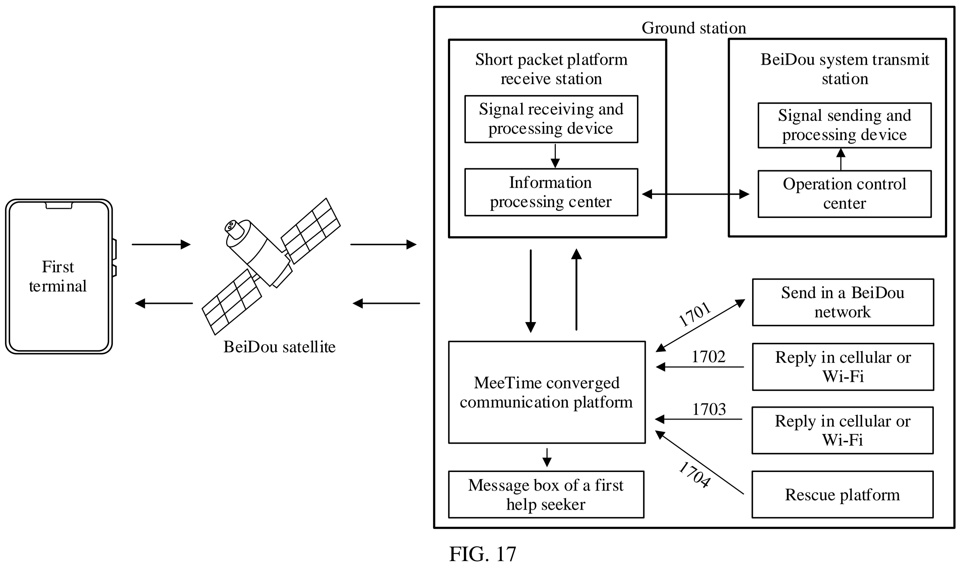

FIG. 17 is a diagram of an interaction procedure of terminal-satellite-ground station. The following describes an overall procedure of a method for sending target shared information provided in this application with reference to FIG. 17.

First, a first terminal sends first help-seeking information to a BeiDou satellite. Correspondingly, the BeiDou satellite receives the first help-seeking information.

Then, the BeiDou satellite sends the received first help-seeking information to a short packet platform receive station of a ground station. The short packet platform receive station includes but is not limited to a signal receiving and processing device and an information processing center. The signal receiving and processing device is configured to receive the first help-seeking information sent by the BeiDou satellite, and the information processing center is configured to process the first help-seeking information sent by the signal receiving and processing device. For example, the signal receiving and processing device sends the received first help-seeking information to the information processing center; and the information processing center preprocesses the received first help-seeking information, for example, performs preprocessing such as noise filtering and signal amplification on the received first help-seeking information. The information processing center sends processed first help-seeking information to a MeeTime converged communication platform. The MeeTime converged communication platform generates target shared information based on the processed first help-seeking information, and stores the target shared information in a message box of a first help seeker. In addition, the MeeTime converged communication platform further performs protocol conversion on the processed first help-seeking information to obtain converted first help-seeking information.

In an optional implementation, the MeeTime converged communication platform sends the converted first help-seeking information to a first rescuer by using a MeeTime application in a BeiDou network, and receives, by using the MeeTime application, reply information of the first rescuer for the first help-seeking information, as shown in 1701 in FIG. 17. Correspondingly, the first rescuer may send reply information X for the first help-seeking information to the MeeTime converged communication platform in a cellular network or wireless fidelity (wireless fidelity, Wi-Fi), as shown in 1702 in FIG. 17.

In another optional implementation, the MeeTime converged communication platform may receive, in a BeiDou satellite message service web page logged in by the first help seeker in the cellular network or Wi-Fi, the reply information of the first rescuer for the first help-seeking information. Correspondingly, the first rescuer may log in to the BeiDou satellite message service web page in the cellular network or Wi-Fi to submit the reply information for the first help-seeking information to the MeeTime converged communication platform, as shown in 1703 in FIG. 17.

In still another optional implementation, the MeeTime converged communication platform may receive, in the cellular network or Wi-Fi by using a rescue platform, the reply information of the first rescuer for the first help-seeking information. Correspondingly, the first rescuer may log in to the rescue platform in the cellular network or Wi-Fi to submit the reply information for the first help-seeking information to the MeeTime converged communication platform, as shown in 1704 in FIG. 17.

Further, the MeeTime converged communication platform may store, in the message box of the first help seeker, the reply information that is submitted by the first rescuer and that is for the first help-seeking information.

Finally, the MeeTime converged communication platform may send the reply information for the first help-seeking information to the satellite in a query feedback manner. Then, the satellite forwards the reply information for the first help-seeking information to the first terminal.

For example, the MeeTime converged communication platform obtains the reply information for the first help-seeking information from the message box of the first help seeker, and returns the reply information for the first help-seeking information to the information processing center. The information processing center sends the reply information for the first help-seeking information to an operation control center of a BeiDou system transmit station. The operation control center sends the reply information for the first help-seeking information to the signal sending and processing device of the BeiDou system transmit station. The signal sending and processing device performs processing such as modulation on the reply information, and sends processed reply information to the BeiDou satellite. After receiving the reply information, the BeiDou satellite forwards the reply information to the first terminal. It should be noted that the BeiDou system transmit station includes but is not limited to the operation control center and the signal sending and processing device. The operation control center may be configured to process information from the information processing center, and the signal sending and processing device may be configured to send the reply information to the BeiDou satellite.

The foregoing describes in detail an example of the method for sending the target shared information provided in this application. It may be understood that, to implement the foregoing functions, the electronic device includes a corresponding hardware structure and/or software module for performing each of the functions. Persons skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In this application, division into functional units may be performed on the method for sending the target shared information based on the foregoing method example. For example, each functional unit may be obtained through division based on each function, or two or more functions may be integrated into one unit. The integrated unit may be implemented in a form of hardware, or may be implemented in a form of software functional unit. It should be noted that, in this application, division into the units is an example, is merely logical function division, and may be other division during actual implementation.

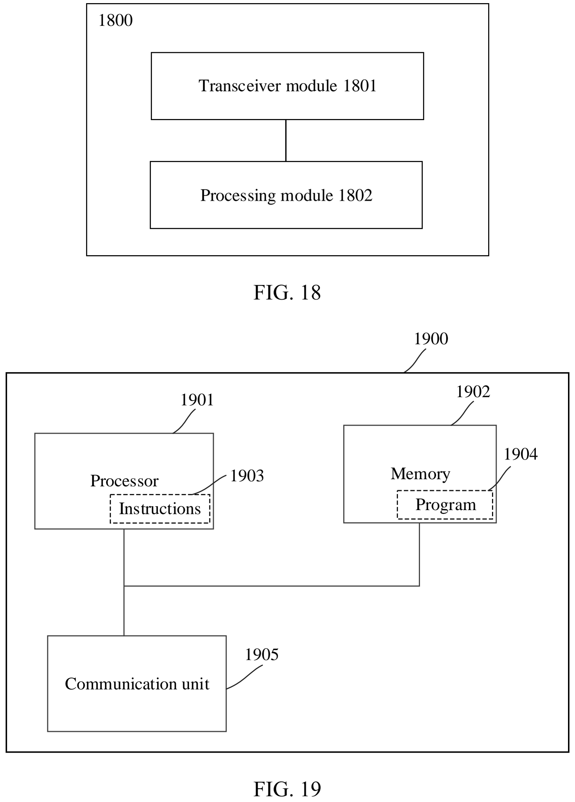

FIG. 18 is a diagram of a structure of an apparatus 1800 for sending target shared information according to this application. The apparatus 1800 may be a server, a module (for example, a processor, a chip, or a chip system) used in the server, or a logical node, a logical module, or software that can implement all or a part of functions of the server.

The apparatus 1800 may alternatively be a terminal device, a module (for example, a processor, a chip, or a chip system) used in the terminal device, or a logical node, a logical module, or software that can implement all or a part of functions of the terminal device.

The apparatus 1800 includes a transceiver module 1801. Optionally, the apparatus 1800 further includes a processing module 1802.

The transceiver module 1801 may implement a corresponding transceiver function, and the transceiver module 1801 may also be referred to as a communication interface or a communication unit. The processing module 1802 is configured to perform a processing operation.

Optionally, the apparatus 1800 may further include a storage module. The storage module may be configured to store instructions and/or data. The processing module 1802 may read the instructions and/or the data in the storage module, so that the apparatus 1800 implements the method embodiment shown in FIG. 3.

The apparatus 1800 may be configured to perform an action performed by the ground station in the foregoing method embodiments. The transceiver module 1801 is configured to perform sending-related and receiving-related operations of the ground station in the foregoing method embodiments, and the processing module 1802 is configured to perform processing-related operations of the ground station in the foregoing method embodiments.

Optionally, the transceiver module 1801 may include a sending module and a receiving module. The sending module is configured to perform a sending operation of the ground station in the method embodiment shown in FIG. 3. The receiving module is configured to perform a receiving operation of the ground station in the method embodiment shown in FIG. 3.

It should be noted that the apparatus 1800 may include the sending module but does not include the receiving module. Alternatively, the apparatus 1800 may include the receiving module but does not include the sending module. This may be specifically determined based on whether the foregoing solutions performed by the apparatus 1800 include a sending action and a receiving action.

The apparatus 1800 is configured to perform a part of or all steps performed by the ground station in the embodiment shown in FIG. 3. For details, refer to the related descriptions in the embodiment shown in FIG. 3. For example, the apparatus 1800 may perform the following solution:
The transceiver module 1801 is configured to separately receive, through a satellite, first help-seeking information sent by a first terminal and second help-seeking information sent by a second terminal, where the first help-seeking information includes first help-seeking content, first sending time, and first location information, the second help-seeking information includes second help-seeking content, second sending time, and second location information, the first sending time is sending time of the first help-seeking content, the first location information indicates a location at which the first terminal sends the first help-seeking content, the second sending time is sending time of the second help-seeking content, and the second location information indicates a location at which the second terminal sends the second help-seeking content.

The processing module 1802 is configured to: when a time difference does not exceed first preset time and a distance difference does not exceed a preset distance, generate the target shared information based on the first help-seeking information and the second help-seeking information, where the target shared information indicates help-seeking information of the first terminal and help-seeking information of the second terminal, the time difference is an absolute value of a difference between the first sending time and the second sending time, and the distance difference is an absolute value of a distance difference between the location indicated by the first location information and the location indicated by the second location information.

The transceiver module 1801 is further configured to send the target shared information to a target terminal, where the target terminal is the first terminal and/or the second terminal.

For a specific manner in which the apparatus 1800 performs the method for sending the target shared information and generated beneficial effects, refer to related descriptions in the method embodiment shown in FIG. 3. Details are not described herein again.

In the apparatus 1800, the processing module 1802 is further configured to determine, within second preset time, a total quantity of terminals that send help-seeking information; and the transceiver module 1801 is further configured to: when the total quantity is greater than or equal to a preset quantity threshold, send the target shared information to the target terminal in a receipt manner. For beneficial effects of performing the step by the transceiver module 1801 and the processing module 1802, refer to the foregoing embodiments. Details are not described herein again.

In the apparatus 1800, the transceiver module 1801 is further configured to: when the total quantity is less than the preset quantity threshold, send the target shared information to the target terminal in the receipt manner or a query feedback manner, where the query feedback manner is a manner of sending the target shared information to the target terminal in response to query information of the target terminal. For beneficial effects of performing the step by the transceiver module 1801, refer to the foregoing embodiments. Details are not described herein again.

In the apparatus 1800, the transceiver module 1801 is further configured to: receive first query information and/or second query information through the satellite, where the first query information is used to query the first rescue information, the second query information is used to query the second rescue information, the first rescue information is rescue information corresponding to the first help-seeking information, and the second rescue information is rescue information corresponding to the second help-seeking information; and send the target shared information to the first terminal when the first rescue information is not found based on the first query information, and/or send the target shared information to the second terminal when the second rescue information is not found based on the second query information. For beneficial effects of performing the step by the transceiver module 1801, refer to the foregoing embodiments. Details are not described herein again.

In the apparatus 1800, the transceiver module 1801 is further configured to: when finding the first rescue information based on the first query information, send the first rescue information to the first terminal, and/or when finding the second rescue information based on the second query information, send the second rescue information to the second terminal. For beneficial effects of performing the step by the transceiver module 1801, refer to the foregoing embodiments. Details are not described herein again.

In the apparatus 1800, the target shared information includes a user identifier of the first terminal and a user identifier of the second terminal, the user identifier of the first terminal is a user identifier allocated based on a device identifier of the first terminal in the first help-seeking information, and the user identifier of the second terminal is a user identifier allocated based on a device identifier of the second terminal in the second help-seeking information. For beneficial effects of this part, refer to the foregoing related embodiments. Details are not described herein again.

In the apparatus 1800, the transceiver module 1801 is further configured to: receive third help-seeking information from the first terminal, where the third help-seeking information includes third help-seeking content and the user identifier of the second terminal; and send the third help-seeking information to the second terminal based on the user identifier of the second terminal. For beneficial effects of performing the step by the transceiver module 1801, refer to the foregoing embodiments. Details are not described herein again.

FIG. 19 is a diagram of a structure of an electronic device according to this application. A dashed line in FIG. 19 indicates that a unit or a module is optional. An electronic device 1900 may be configured to implement the methods described in the foregoing method embodiments. The electronic device 1900 may be a terminal device or a server, or may be a module (for example, a processor, a chip, or a chip system) used in the terminal device or the server, or a logical node, a logical module, or software that can implement all or a part of functions of the terminal device, or a logical node, a logical module, or software that can implement all or a part of functions of the server.

The electronic device 1900 includes one or more processors 1901. The one or more processors 1901 may support the electronic device 1900 in implementing the method in the method embodiment corresponding to FIG. 3. The processor 1901 may be a general-purpose processor or a dedicated processor. For example, the processor 1901 may be a central processing unit (Central Processing Unit, CPU). The CPU may be configured to: control the electronic device 1900, execute a software program, and process data of the software program. The electronic device 1900 may further include a communication unit 1905, configured to implement signal input (receiving) and output (sending).

The electronic device 1900 may be a chip (system). The chip (system) includes a memory and a processor. The processor is configured to execute a computer program stored in the memory, to implement the methods shown in the foregoing embodiments.

The communication unit 1905 may be an input and/or output circuit of the chip (system), or the communication unit 1905 may be a communication interface of the chip (system). The chip (system) may be used as a component of the electronic device 1900.

For another example, the communication unit 1905 may be a transceiver of the electronic device 1900, or the communication unit 1905 may be a transceiver circuit of the electronic device 1900.

The electronic device 1900 may include one or more memories 1902. The memory 1902 stores a program 1904. The program 1904 may be run by the processor 1901 to generate instructions 1903, to enable the processor 1901 to perform, according to the instructions 1903, the methods described in the foregoing method embodiments. Optionally, the memory 1902 may further store data. Optionally, the processor 1901 may further read the data stored in the memory 1902. The data and the program 1904 may be stored at a same storage address, or the data and the program 1904 may be stored at different storage addresses.

The processor 1901 and the memory 1902 may be disposed separately, or may be integrated together, for example, integrated on a system on chip (System On Chip, SOC) of the electronic device.

For a specific manner in which the processor 1901 performs the method for sending the target shared information, refer to related descriptions in the method embodiments.

It should be understood that the steps in the foregoing method embodiments may be completed by using a logic circuit in a form of hardware or instructions in a form of software in the processor 1901. The processor 1901 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by the processor 1901, the method in any method embodiment of this application is implemented.

The computer program product may be stored in the memory 1902. For example, the computer program product is the program 1904. After processing processes such as preprocessing, compilation, assembly, and linking, the program 1904 is finally converted into an executable target file that can be executed by the processor 1901.

This application further provides a computer-readable storage medium. The computer-readable storage medium stores a computer program. When the computer program is executed by a computer, the method in any method embodiment of this application is implemented. The computer program may be a high-level language program, or may be an executable target program.

The computer-readable storage medium is, for example, the memory 1902. The memory 1902 may be a volatile memory or a nonvolatile memory, or the memory 1902 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DRRAM).

It may be clearly understood by persons skilled in the art that, for ease and brevity of description, for a specific working procedure and generated technical effect of the foregoing apparatus and device, refer to a corresponding procedure and corresponding technical effect in the foregoing method embodiment. Details are not described herein again.

In the several embodiments provided in this application, the disclosed systems, apparatuses, and methods may be implemented in other manners. For example, some features of the method embodiments described above may be ignored or not performed. The apparatus embodiment described above is merely an example. Division into the units is merely logical function division, and may be other division during actual implementation. A plurality of units or components may be combined or integrated into another system. In addition, coupling between the units or coupling between the components may be direct coupling or indirect coupling. The coupling may include an electrical connection, a mechanical connection, or another form of connection.

The foregoing embodiments are merely intended for describing the technical solutions of this application, but not for limiting the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for sending target shared information, wherein the method comprises:
separately receiving, through a satellite, first help-seeking information sent by a first terminal and second help-seeking information sent by a second terminal, wherein the first help-seeking information comprises first help-seeking content, first sending time, and first location information, the second help-seeking information comprises second help-seeking content, second sending time, and second location information, the first sending time is sending time of the first help-seeking information, the first location information indicates a location at which the first terminal sends the first help-seeking information, the second sending time is sending time of the second help-seeking information, and the second location information indicates a location at which the second terminal sends the second help-seeking information;
when a time difference does not exceed first preset time and a distance difference does not exceed a preset distance, generating the target shared information based on the first help-seeking information and the second help-seeking information, wherein the target shared information indicates help-seeking information of the first terminal and help-seeking information of the second terminal, the time difference is an absolute value of a difference between the first sending time and the second sending time, and the distance difference is an absolute value of a distance difference between the location indicated by the first location information and the location indicated by the second location information; and
sending the target shared information to a target terminal, wherein the target terminal is the first terminal and/or the second terminal.

2. The method according to claim 1, wherein sending the target shared information to the target terminal comprises:
determining, within second preset time, a total quantity of terminals that send help-seeking information; and
when the total quantity is greater than or equal to a preset quantity threshold, sending the target shared information to the target terminal in a receipt manner.

3. The method according to claim 2, wherein the method further comprises:
when the total quantity is less than the preset quantity threshold, sending the target shared information to the target terminal in the receipt manner or a query feedback manner, wherein the query feedback manner is a manner of sending the target shared information to the target terminal in response to query information of the target terminal.

4. The method according to any one of claims 1 to 3, wherein sending the target shared information to the target terminal comprises:
receiving first query information and/or second query information through the satellite, wherein the first query information is used to query first rescue information, the second query information is used to query second rescue information, the first rescue information is rescue information corresponding to the first help-seeking information, and the second rescue information is rescue information corresponding to the second help-seeking information; and
sending the target shared information to the first terminal when the first rescue information is not found based on the first query information, and/or sending the target shared information to the second terminal when the second rescue information is not found based on the second query information.

5. The method according to claim 4, wherein the method further comprises:
sending the first rescue information to the first terminal when the first rescue information is found based on the first query information, and/or sending the second rescue information to the second terminal when the second rescue information is found based on the second query information.

6. The method according to any one of claims 1 to 5, wherein the target shared information comprises a user identifier of the first terminal and a user identifier of the second terminal, the user identifier of the first terminal is a user identifier allocated based on a device identifier of the first terminal in the first help-seeking information, and the user identifier of the second terminal is a user identifier allocated based on a device identifier of the second terminal in the second help-seeking information.

7. The method according to claim 6, wherein after sending the target shared information to the target terminal, the method further comprises:
receiving third help-seeking information from the first terminal, wherein the third help-seeking information comprises third help-seeking content and the user identifier of the second terminal; and
sending the third help-seeking information to the second terminal based on the user identifier of the second terminal.

8. An electronic device, wherein the electronic device comprises a processor and a memory, the memory is configured to store a computer program, and the processor is configured to: invoke the computer program from the memory and run the computer program, so that the electronic device performs the method according to any one of claims 1 to 7.

9. A computer-readable storage medium, wherein the computer-readable storage medium stores a computer program, and when the computer program is executed by a processor, the processor is enabled to perform the method according to any one of claims 1 to 7.

10. A chip system, wherein the chip system comprises a memory and a processor, and the processor is configured to execute a computer program stored in the memory, to implement the method according to any one of claims 1 to 7.
